# EUROPEAN PATENT APPLICATION

(11) **EP 4 512 248 A2**
(43) Date of publication of application: **26.02.2025**
(21) Application number: 25151510.2
(22) Date of filing: 24.10.2019
(51) Int. Cl.: A01P 3/00

(54) **METHOD FOR CONTROLLING DISEASES IN SMALL GRAIN CEREALS, SEED OF SMALL GRAIN CEREALS, AND METHOD FOR SUPPRESSING LODGING DAMAGE IN SMALL GRAIN CEREALS**

(30) Priority: 31.10.2018 JP 2018205757
(62) Divisional of application: 19880652.3
(71) Applicant: Kumiai Chemical Industry Co., Ltd., Taito-ku Tokyo 110-8782 (JP)
(72) Inventor: SUZUKI, Satomi, Taito-ku (JP); OZAKI, Koichi, Taito-ku (JP); NAGATA, Toshihiro, Taito-ku (JP)
(74) Representative: Boult Wade Tennant LLP

(57) **Abstract**

The present invention provides a method for controlling a small grain cereals disease, in particular, powdery mildew, leaf rust, septoria leaf blotch, or eye spot, highly effectively and labor-savingly, a method for suppressing lodging damage of small grain cereals, and seed of small grain cereals. A method for controlling a small grain cereals disease, a method for suppressing lodging damage of small grain cereals, and seed of small grain cereals, in which seed of small grain cereals is treated with one or two or more selected from a dichloroisothiazole compound or a salt thereof, are provided.

## Description

### TECHNICAL FIELD

The present invention relates to a method for controlling a small grain cereals disease, seed of small grain cereals, and a method for suppressing lodging damage of small grain cereals, by treating seed of small grain cereals with a dichloroisothiazole compound. More specifically, the present invention relates to a method for controlling a small grain cereals disease, seed of small grain cereals, and a method for suppressing lodging damage of small grain cereals, which exert a high control effect and can further save labor and reduce costs of control than ever before.

### BACKGROUND ART

Small grain cereals are main cereals cultivated in the whole world, and, in particular, wheat is the most important crop. Thus, control of various diseases influencing the yield of wheat has become an important subject in view of food production. Currently, wheat powdery mildew, septoria leaf blotch, leaf rust, and eye spot which are main diseases of wheat after a middle growing period are controlled by spraying foliage with a fungicide during a growing period. However, any of the diseases has a problem of a chemical tolerance, and the effect is insufficient in many cases. Moreover, an immense amount of effort is required to spray a controlling chemical on the whole of an extensive wheat field, and a lot of money is required because large quantities of a controlling chemical and an extensive mechanical device for control are required. Thus, for these wheat diseases, the development of a disease controlling chemical having a new mechanism of action, which is effective against resistant fungi, and the development of a control method by which effort and cost are reduced, such as a decrease in the number of times of spraying, have been actively examined.

For example, wheat powdery mildew is caused by *Blumeria graminis,* and its occurrence is observed in many wheat cultivation areas. Diseased leaves wither early, and crop failure leads to a decrease in yield. Wheat powdery mildew occurs between a thaw and a harvest period in a snowfall area and between a middle growth period and a harvest period in a non-snowfall area, and occurs in the latter half of a cultivation period from a few months to a half year has passed after seeding (Non-patent Document 1). Moreover, powdery mildew forms numerous conidiospores on lesions, and the conidiospores are dispersed by wind to repeat transmission. Control of the disease is performed by spraying a suspension of a controlling chemical on the whole surface of a wheat field during an early period of the occurrence, and an immense amount of effort and a lot of costs are required as described above. Compounds called a QoI agent which inhibits cytochrome b of mitochondrial electron transport complex III and a DMI agent which inhibits sterol biosynthesis have a high effect, and thus are used as main controlling chemicals, but the occurrence of resistant fungi have been reported for either compound (Non-patent Document 2, Non-patent Document 3).

Septoria leaf blotch of wheat is caused by *Septoria tritici* and is the most problematic disease in main wheat cultivation regions such as Europe, America, and Australia. Due to the disease, there is a report of a decrease in yield of 40% or more and catastrophic damage. Septoria leaf blotch of wheat begins to occur at a 4-5 leaf stage and occurs often in the latter half of a cultivation period, from a few months to a half year after seeding (Non-patent Document 4). Moreover, numerous ascospores are formed on lesions and dispersed by wind to repeat transmission. Control of the disease is performed by spraying a suspension of a controlling chemical on the whole surface of a wheat field for the purpose of controlling flag leaves during a late growing period. A QoI agent and a DMI agent are used as main controlling chemicals, but the occurrence of resistant fungi have been reported for either compound (Non-patent Document 2, Non-patent Document 5). Therefore, recently, a compound categorized as an SDHI agent, which inhibits succinate dehydrogenase of mitochondrial electron transport complex II has been developed as a septoria leaf blotch of wheat controlling chemical to be sprayed on foliage and is considered as a main controlling means in the future (Non-patent Document 2). However, the occurrence of resistant fungi have been already reported for this compound (Non-patent Document 6).

Wheat leaf rust is caused by *Puccinia recondita,* and the occurrence is observed in many wheat cultivation areas. A decrease in the number of ears and the number of grains per head, and moreover a decrease in grain weight lead to a decrease in yield. Wheat leaf rust also occurs between a thaw and a harvest period in a snowfall area and between a middle growth period and a harvest period in a non-snowfall area, and occurs in the latter half of a cultivation period from a few months to a half year has passed after seeding (Non-patent Document 1). Leaf rust also forms numerous spores on lesions, and the spores are dispersed by wind to repeat transmission. Control of leaf rust is also performed by spraying a suspension of a controlling chemical on the whole surface of a wheat field during an early period of the occurrence, and a QoI agent and a DMI agent are mainly used.

In addition, Benlate T wettable powder 20 ("Benlate" is a registered trademark), Benlate T coat ("Benlate" is a registered trademark), Homai wettable powder ("Homai" is a registered trademark), Trifmine wettable powder ("Trifmine" is a registered trademark), Befran liquid ("Befran" is a registered trademark), and the like are agricultural chemicals registered and sold as seed treatment agents of wheat. However, diseases which can be controlled by seed treatment are limited to stinking smut, loose smut, mottle leaf, cephalosporium stripe, snow mold, and the like which occur from seed transmission or soil transmission, and a seed treatment agent capable of controlling wheat powdery mildew, septoria leaf blotch, leaf rust, and eye spot is not known.

### RELATED ART DOCUMENTS

### NON-PATENT DOCUMENTS

[Non-patent Document 1] Agriculture Overview, Pest Control/Material Edition 1, 449-488 (1990)
[Non-patent Document 2] Fungicide Resistance in Plant Pathogens, 105-143 (2015)
[Non-patent Document 3] Neth. JPL. Path. 92: 21-32 (1986)
[Non-patent Document 4] European Handbook of Plant Diseases, 353-354 (1988)
[Non-patent Document 5] Applied and Environmental Microbiology, 77: 3830-3837 (2011)
[Non-patent Document 6] FRAC (Fungicide Resistance Action Committee), Accessed 22 October (2016), [http://www.frac.info/docs/default-source/sdhi-wg/sdhi-meeting-minutes/minutes-of-the-2014 -sdhi-meeting-recommendations-for-2015-v2. pdf?sfvrsn=8a154a9a_10]

### SUMMARY OF INVENTION

### PROBLEMS TO BE SOLVED BY THE INVENTION

It is an object of the present invention to provide a method for controlling a small grain cereals disease, seed of small grain cereals, and a method for suppressing lodging damage of small grain cereals, which exert a high control effect and can further save labor and reduce costs of control than ever before.

### MEANS FOR SOLVING THE PROBLEMS

In order to achieve the above-described objects, the present inventors conducted various examinations of a method for controlling a small grain cereals disease and found that, by treating seeds of small grain cereals with a dichloroisothiazole compound and sowing the seeds, a spraying operation of a controlling chemical on the whole of an extensive wheat field can be omitted without worrying about an injury to a crop and without worrying about a decrease in a control effect due to the presence of drug-resistant fungi, and a high control effect is exerted for a disease which occurs in the latter half of a cultivation period, such as powdery mildew, septoria leaf blotch, leaf rust, or eye spot, to complete the present invention.

Namely, the present invention is as follows.
(1) A method for controlling a small grain cereals disease including: treating seed of small grain cereals with one or two or more selected from a dichloroisothiazole compound or a salt thereof.
(2) The method for controlling a small grain cereals disease according to the above (1), in which the dichloroisothiazole compound or the salt thereof is a 3,4-dichloroisothiazole derivative or a salt thereof represented by the following Formula (1): 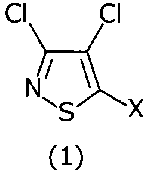
   in Formula (1), X is any one of groups represented by Formulas (2) to (8), 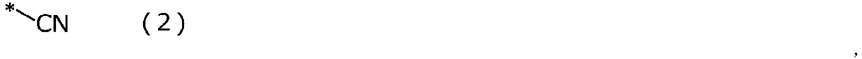 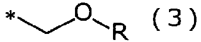
   in Formula (3), R is a hydrogen atom; a (C1-C6) alkylcarbonyl group which may be substituted; a (C3-C6) cycloalkylcarbonyl group which may be substituted; a (C2-C6) alkenylcarbonyl group which may be substituted; a (C2-C6) alkynylcarbonyl group which may be substituted; a nitrogen-containing condensed heterocyclic group which may be substituted; or a benzoyl group which may be substituted with a substituent α, 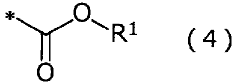
   in Formula (4), R¹ is a hydrogen atom; a (C1-C6) alkyl group which may be substituted; a (C3-C6) cycloalkyl group which may be substituted; a (C2-C6) alkenyl group which may be substituted; or a (C2-C6) alkynyl group which may be substituted, 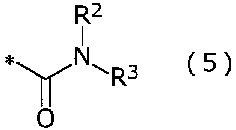
   in Formula (5), R² and R³ are each independently a hydrogen atom; a (C1-C6) alkyl group which may be substituted; a (C3-C6) cycloalkyl group which may be substituted; a (C2-C6) alkenyl group which may be substituted; a (C2-C6) alkynyl group which may be substituted; or a phenyl group which may be substituted with a substituent α; or R² and R³ may bond to form a 4-6 membered heterocycle, and the heterocycle may be substituted, 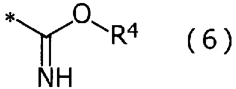
   in Formula (6), R⁴ is a (C1-C6) alkyl group which may be substituted; a (C3-C6) cycloalkyl group which may be substituted; a (C2-C6) alkenyl group which may be substituted; a (C2-C6) alkynyl group which may be substituted; or a benzyl group which may be substituted with a substituent α, 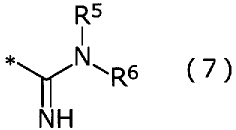
   in Formula (7), R⁵ and R⁶ are each independently a hydrogen atom; a (C1-C6) alkyl group which may be substituted; a (C3-C6) cycloalkyl group which may be substituted; a (C2-C6) alkenyl group which may be substituted; a (C2-C6) alkynyl group which may be substituted; or a phenyl group which may be substituted with a substituent α; or R⁵ and R⁶ may bond to form a 4-6 membered heterocycle, and the heterocycle may be substituted, 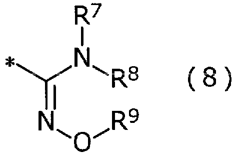
   in Formula (8), R⁷ and R⁸ are each independently a hydrogen atom; a (C1-C6) alkyl group which may be substituted; a (C3-C6) cycloalkyl group which may be substituted; a (C2-C6) alkenyl group which may be substituted; a (C2-C6) alkynyl group which may be substituted; or a phenyl group which may be substituted with a substituent α; or R⁷ and R⁸ may bond to form a 4-6 membered heterocycle, and the heterocycle may be substituted, and R⁹ is a hydrogen atom; a (C1-C6) alkyl group which may be substituted; a (C3-C6) cycloalkyl group which may be substituted; a (C2-C6) alkenyl group which may be substituted; or a (C2-C6) alkynyl group which may be substituted, and
   the substituent α is a (C1-C6) alkyl group, a (C3-C6) cycloalkyl group, a (C1-C6) haloalkyl group, a phenyl group, a halogen atom, a cyano group, a nitro group, a hydroxyl group, a (C1-C6) alkoxy group, a (C1-C5) acyl group, a carboxyl group, a (C1-C6) alkoxycarbonyl group, a mono(C1-C6 alkyl) carbamoyl group, a di(C1-C6 alkyl) carbamoyl group, an amino group, a mono(C1-C6 alkyl) amino group, or a di(C1-C6 alkyl) amino group.
(3) The method for controlling a small grain cereals disease according to the above (2), in which the 3,4-dichloroisothiazole derivative or the salt thereof is one or two or more selected from the following compounds or salts thereof: 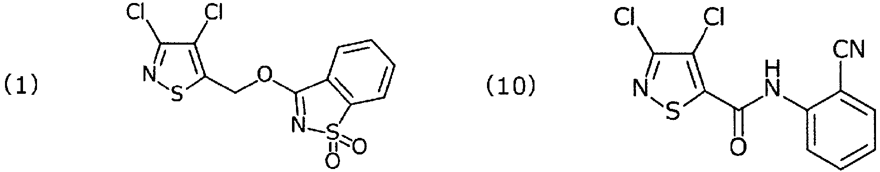 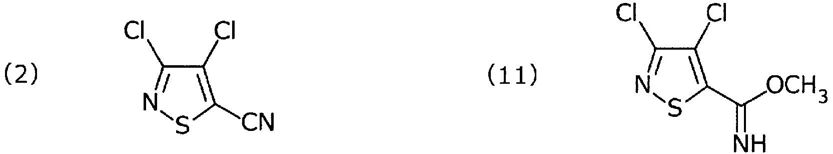 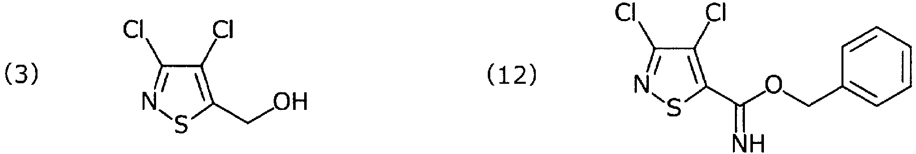 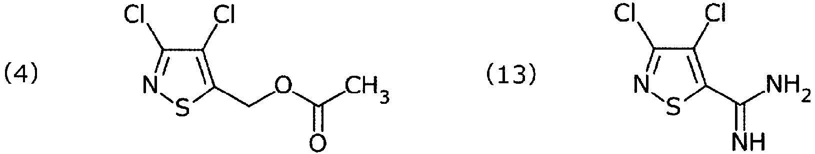 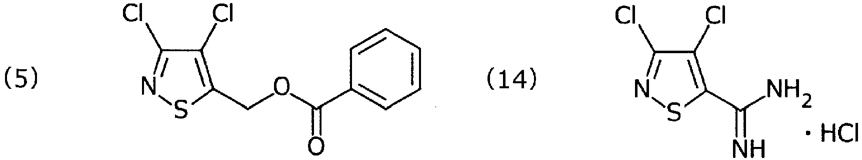 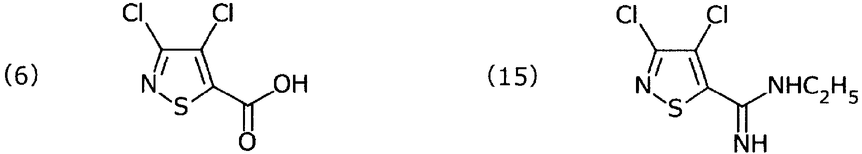 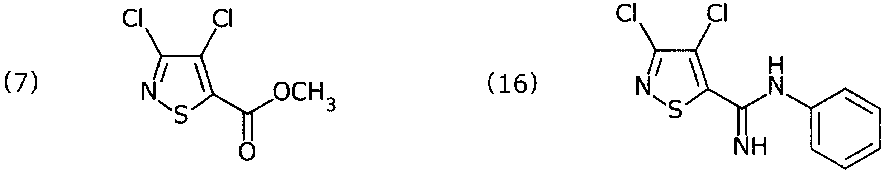 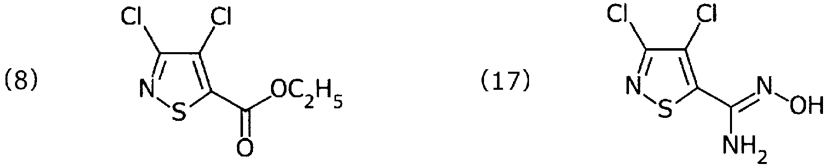 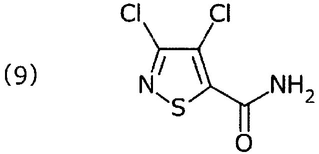
(4) The method for controlling a small grain cereals disease according to any of the above (1) to (3), in which the small grain cereals is at least one selected from wheat, barley, rye, and oat.
(5) The method for controlling a small grain cereals disease according to the above (4), in which the small grain cereals is wheat.
(6) The method for controlling a small grain cereals disease according to any of the above (1) to (5), in which the seed of small grain cereals is treated with one or two or more selected from the dichloroisothiazole compound or the salt thereof by a method of dust coating, smearing, spraying or immersing.
(7) The method for controlling a small grain cereals disease according to any of the above (1) to (6), in which the treating is performed further in combination with one or two or more selected from a fungicide, an insecticide, a miticide, a nematicide, a herbicide, a plant growth regulator, and a safener.
(8) A method for suppressing lodging damage of small grain cereals including: treating seed of small grain cereals with one or two or more selected from a dichloroisothiazole compound or a salt thereof.
(9) Seed of small grain cereals treated with one or two or more selected from a dichloroisothiazole compound or a salt thereof.

### EFFECTS OF THE INVENTION

According to the present invention, by only treating seed of small grain cereals with a controlling chemical containing a dichloroisothiazole compound as an active ingredient before seeding, a high control effect is obtained for a small grain cereals disease, in particular, powdery mildew, septoria leaf blotch, leaf rust, or eye spot, which occurs in the latter half of a cultivation period, a spraying operation of a controlling chemical on the whole of an extensive wheat field can be omitted, and costs of control can also be significantly reduced.

### MODE FOR CARRYING OUT THE INVENTION

Definitions of symbols and terms used herein are as follows.

In the present invention, a "halogen atom" refers to a fluorine atom, a chlorine atom, a bromine atom, or an iodine atom.

In the present invention, "may be substituted" means, unless otherwise limited, may be substituted with a (C1-C6) alkyl group, a (C3-C6) cycloalkyl group, a (C1-C6) haloalkyl group, a phenyl group, a halogen atom, a cyano group, a nitro group, a hydroxyl group, a (C1-C6) alkoxy group, a (C1-C5) acyl group, a carboxyl group, a (C1-C6) alkoxycarbonyl group, a mono(C1-C6 alkyl) carbamoyl group, a di(C1-C6 alkyl) carbamoyl group, an amino group, a mono(C1-C6 alkyl) amino group, a di(C1-C6 alkyl) amino group, or the like.

In the present invention, the notation such as C1-C6 means that the number of carbon atoms of a substituent following this notation is from 1 to 6 in this case.

In the present invention, a "(C1-C6) alkyl group" refers to, unless otherwise limited, a straight chain or branched chain alkyl group having 1 to 6 carbon atoms, and examples thereof include methyl, ethyl, n-propyl, isopropyl, n-butyl, sec-butyl, isobutyl, tert-butyl, n-pentyl, 1-methylbutyl, 2-methylbutyl, 3-methylbutyl, 1-ethylpropyl, 1,1-dimethylpropyl, 1,2-dimethylpropyl, neopentyl, n-hexyl, 1-methylpentyl, 2-methylpentyl, 3-methylpentyl, 4-methylpentyl, 1-ethylbutyl, 2-ethylbutyl, 1,1-dimethylbutyl, 1,2-dimethylbutyl, 1,3-dimethylbutyl, 2,2-dimethylbutyl, 2,3-dimethylbutyl, 3,3-dimethylbutyl, 1,1,2-trimethylpropyl, 1,2,2-trimethylpropyl, 1-ethyl-1-methylpropyl, and 1-ethyl-2-methylpropyl groups.

It is to be noted that, for example, the "(C1-C6) alkyl group" may be mono-substituted or poly-substituted with halogen atoms, specifically, may be substituted with 1 to 13 halogen atoms.

In the present invention, a "(C1-C6) alkylcarbonyl group" refers to, unless otherwise limited, a (C1-C6 alkyl)-CO- group, in which the alkyl moiety is the above sense, and examples thereof include acetyl, propionyl, isopropionyl, pivaloyl, and 3,3-dimethylbutanoyl groups.

In the present invention, a "(C3-C6) cycloalkyl group" refers to, unless otherwise limited, a monocyclic or cross-linked cyclic cycloalkyl group having 3 to 6 carbon atoms, and examples thereof include cyclopropyl, cyclobutyl, cyclopentyl, and cyclohexyl groups.

In the present invention, a "(C3-C6) cycloalkylcarbonyl group" refers to, unless otherwise limited, a (C3-C6 cycloalkyl)-CO- group, in which the cycloalkyl moiety is the above sense, and examples thereof include cyclopropylcarbonyl, cyclobutylcarbonyl, cyclopentylcarbonyl, and cyclohexylcarbonyl groups.

In the present invention, a "(C2-C6) alkenyl group" refers to, unless otherwise limited, a straight chain or branched chain alkenyl group having 2 to 6 carbon atoms, and examples thereof include vinyl, 1-propenyl, isopropenyl, 2-propenyl, 1-butenyl, 1-methyl-1-propenyl, 2-butenyl, 1-methyl-2-propenyl, 3-butenyl, 2-methyl-1-propenyl, 2-methyl-2-propenyl, 1,3-butadienyl, 1-pentenyl, 1-ethyl-2-propenyl, 2-pentenyl, 1-methyl-1-butenyl, 3-pentenyl, 1-methyl-2-butenyl, 4-pentenyl, 1-methyl-3-butenyl, 3-methyl-1-butenyl, 1,2-dimethyl-2-propenyl, 1,1-dimethyl-2-propenyl, 2-methyl-2-butenyl, 3-methyl-2-butenyl, 1,2-dimethyl-1-propenyl, 2-methyl-3-butenyl, 3-methyl-3-butenyl, 1,3-pentadienyl, 1-vinyl-2-propenyl, and 1-hexenyl groups.

It is to be noted that, for example, the "(C2-C6) alkenyl group" may be mono-substituted or poly-substituted with phenyl groups, specifically, may be substituted with 1 to 9 phenyl groups.

In the present invention, a "(C2-C6) alkenylcarbonyl group" refers to, unless otherwise limited, a (C2-C6 alkenyl)-CO- group, in which the alkenyl moiety is the above sense, and examples thereof include an acryloyl group, a methacryloyl group, a crotonyl group, a tigloyl group, a pentenecarbonyl group, and a hexenecarbonyl group.

In the present invention, a "(C2-C6) alkynyl group" refers to, unless otherwise limited, a straight chain or branched chain alkynyl group having 2 to 6 carbon atoms, and examples thereof include ethynyl, 1-propynyl, 2-propynyl, 1-butynyl, 1-methyl-2-propynyl, 2-butynyl, 3-butynyl, 1-pentynyl, 1-ethyl-2-propynyl, 2-pentynyl, 3-pentynyl, 1-methyl-2-butynyl, 4-pentynyl, 1-methyl-3-butynyl, 2-methyl-3-butynyl, 1-hexynyl, 1-(n-propyl)-2-propynyl, 2-hexynyl, 1-ethyl-2-butynyl, 3-hexynyl, 1-methyl-2-pentynyl, 1-methyl-3-pentynyl, 4-methyl-1-pentynyl, 3-methyl-1-pentynyl, 5-hexynyl, 1-ethyl-3-butynyl, 1-ethyl-1-methyl-2-propynyl, 4-methyl-1-pentyne-3-yl, 1,1-dimethyl-2-butynyl, and 2,2-dimethyl-3-butynyl groups.

In the present invention, a "(C2-C6) alkynylcarbonyl group" refers to, unless otherwise limited, a (C2-C6 alkynyl)-CO- group, in which the alkynyl moiety is the above sense, and examples thereof include an acetylenecarbonyl group, a 1-propynecarbonyl group, a 1-butynecarbonyl group, a 1-pentynecarbonyl group, and a hexynecarbonyl group.

In the present invention, unless otherwise limited, examples of a "nitrogen-containing condensed heterocyclic group" include a heterocyclic group having 2 to 10 carbon atoms, which has 1 to 5 nitrogen atoms as heteroatoms, and a heterocyclic group having 2 to 12 carbon atoms, which has at least one nitrogen atom and 1 to 5 heteroatoms selected from oxygen atoms and sulfur atoms.

Examples of the cyclic structure of the heterocyclic group having 2 to 10 carbon atoms, which has 1 to 5 nitrogen atoms, include pyrroline, imidazolidine, imidazoline, pyrazolidine, pyrazoline, indoline, isoindoline, pyrrole, imidazole, pyrazole, purine, carbazole, carbazoline, phthalimide, 1,2,3-triazole, 1,2,4-triazole, pyridine, pyrimidine, pyrazine, pyridazine, pyrrolidine, piperidine, piperazine, indole, isoindole, indolizine, benzimidazole, 1,3,5-triazine, 1,2,4-triazine, 1,2,4-benzotriazine, thiazine, quinoline, isoquinoline, phthalazine, naphthyridine, quinoxaline, quinazoline, cinnoline, and benzotriazole.

Examples of the cyclic structure of the heterocyclic group having 2 to 12 carbon atoms, which has at least one nitrogen atom and 1 to 5 heteroatoms selected from oxygen atoms and sulfur atoms, include morpholine, thiomorpholine, phenothiazine, benzoxazole, benzothiazole, isoxazole, isoxazoline, oxazole, oxazoline, isothiazole, isothiazoline, 1,4,2-dithiazine, 1,4,3-oxathiazine, 1,4,2-dioxazine, 1,4,2-oxathiazine, 1,3-thiazine, 1,3-oxazine, 1,2,5-oxadiazine, 1,2,4-oxadiazine, 1,2,5-thiadiazine, 4H-oxazine, thiazine, 1,2,4-thiadiazine, thiazole, thiazoline, 1,2,3-oxadiazole, 1,2,3-thiadiazole, 1,2,4-oxadiazole, 1,2,4-thiadiazole, 1,2,5-oxadiazole, 1,2,5-thiadiazole, benzisoxazole, benzisothiazole, 1,2,3-benzoxadiazole, 1,2,3-benzothiadiazole, 2,1,3-benzoxadiazole, 2,1,3-benzothiadiazole, 1,4,2-benzodithiazine, 1,2,4-benzodithiazine, 1,4,3-benzoxathiazine, 1,4,2-benzodioxazine, 1,4,2-benzoxathiazine, 1,3-benzothiazine, 1,3-benzoxazine, 1,2,4-benzothiadiazine, 1,2,4-benzoxadiazine, and 1,3-benzoxazine.

The nitrogen-containing condensed heterocyclic group may be substituted, and examples of the substituted nitrogen-containing condensed heterocycle include a heterocycle represented by the following formula:

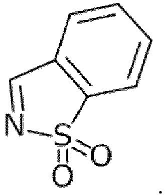

In the present invention, a "(C1-C6) haloalkyl group" refers to, unless otherwise limited, a straight chain or branched chain alkyl group having 1 to 6 carbon atoms, which is substituted with halogen atoms, and examples thereof include fluoromethyl, chloromethyl, bromomethyl, difluoromethyl, dichloromethyl, trifluoromethyl, trichloromethyl, chlorodifluoromethyl, bromodifluoromethyl, 2-fluoroethyl, 1-chloroethyl, 2-chloroethyl, 1-bromoethyl, 2-bromoethyl, 2,2-difluoroethyl, 1,2-dichloroethyl, 2,2-dichloroethyl, 2,2,2-trifluoroethyl, 2,2,2-trichloroethyl, 1,1,2,2-tetrafluoroethyl, 1,1,2,2,2-pentafluoroethyl, 2-bromo-2-chloroethyl, 2-chloro-1,1,2,2-tetrafluoroethyl, 1-chloro-1,2,2,2-tetrafluoroethyl, 1-chloropropyl, 2-chloropropyl, 3-chloropropyl, 2-bromopropyl, 3-bromopropyl, 2-bromo-1-methylethyl, 3-iodopropyl, 2,3-dichloropropyl, 2,3-dibromopropyl, 3,3,3-trifluoropropyl, 3,3,3-trichloropropyl, 3-bromo-3,3-difluoropropyl, 3,3-dichloro-3-fluoropropyl, 2,2,3,3-tetrafluoropropyl, 1-bromo-3,3,3-trifluoropropyl, 1,1,2,3,3,3-hexafluoropropyl, 2,2,3,3,3-pentafluoropropyl, 2,2,2-trifluoro-1-trifluoromethylethyl, 1,1,2,2,2,3,3,3-heptafluoropropyl, 1,2,2,2-tetrafluoro-1-trifluoromethylethyl, 2,3-dichloro-1,1,2,3,3-pentafluoropropyl, 2-chlorobutyl, 3-chlorobutyl, 4-chlorobutyl, 2-chloro-1,1-dimethylethyl, 4-bromobutyl, 3-bromo-2-methylpropyl, 2-bromo-1,1-dimethylethyl, 2,2-dichloro-1,1-dimethylethyl, 1,3-dichlorobutane-2-yl, 4,4,4-trifluorobutyl, 3,3,3-trifluoro-1-methylpropyl, 3,3,3-trifluoro-2-methylpropyl, 2,3,4-trichlorobutyl, 2,2,2-trichloro-1,1-dimethylethyl, 4-chloro-4,4-difluorobutyl, 4,4-dichloro-4-fluorobutyl, 4-bromo-4,4-difluorobutyl, 2,4-dibromo-4,4-difluorobutyl, 3,4-dichloro-3,4,4-trifluorobutyl, 3,3-dichloro-4,4,4-trifluorobutyl, 4-bromo-3,3,4,4-tetrafluorobutyl, 4-bromo-3-chloro-3,4,4-trifluorobutyl, 2,2,3,3,4,4-hexafluorobutyl, 2,2,3,4,4,4-hexafluorobutyl, 2,2,2-trifluoro-1-methyl-1-trifluoromethylethyl, 3,3,3-trifluoro-2-trifluoromethylpropyl, 2,2,3,3,4,4,4-heptafluorobutyl, 2,3,3,3-tetrafluoro-2-trifluoromethylpropyl, 1,1,2,2,3,3,4,4-octafluorobutyl, 1,1,2,2,3,3,4,4,4-nonafluorobutyl, 4-chloro-1,1,2,2,3,3,4,4-octafluorobutyl, 5-fluoropentyl, 5-chloropentyl, 5,5-difluoropentyl, 5,5-dichloropentyl, 5,5,5-trifluoropentyl, 2,2,3,3,4,4,5,5-octafluoropentyl, 6,6,6-trifluorohexyl, 5,5,5,6,6,6-pentafluorohexyl, and 2,2,3,3,4,4,5,5,6,6,6-undecafluorohexyl groups.

In the present invention, a "(C1-C6) alkoxy group" refers to, unless otherwise limited, a (C1-C6 alkyl)-O- group, in which the alkyl moiety is the above sense, and examples thereof include methoxy, ethoxy, n-propoxy, isopropoxy, n-butoxy, isobutoxy, sec-butoxy, tert-butoxy, n-pentoxy, 1-methylbutoxy, 2-methylbutoxy, 3-methylbutoxy, 1-ethylpropoxy, 1,1-dimethylpropoxy, 1,2-dimethylpropoxy, and n-hexyloxy groups.

In the present invention, a "(C1-C6) alkoxycarbonyl group" refers to, unless otherwise limited, a (C1-C6 alkoxy)-C(=O)- group, in which the alkoxy moiety is the above sense, and examples thereof include methoxycarbonyl, ethoxycarbonyl, n-propoxycarbonyl, isopropoxycarbonyl, and tert-butoxycarbonyl groups.

In the present invention, unless otherwise limited, examples of a "(C1-C5) acyl group" include formyl, acetyl, propionyl, butyryl, isobutyryl, and pivaloyl groups.

In the present invention, a "mono(C1-C6 alkyl) carbamoyl group" refers to a (C1-C6 alkyl)-NH-C(=O)- group, in which the alkyl moiety is the above sense, and examples thereof include methylcarbamoyl, ethylcarbamoyl, and propylcarbamoyl groups.

In the present invention, a "di(C1-C6 alkyl) carbamoyl group" refers to a (C1-C6 alkyl)₂-N-C(=O)- group, in which the alkyl moiety is the above sense, and examples thereof include dimethylcarbamoyl, diethylcarbamoyl, and ethylmethylcarbamoyl groups.

In the present invention, a "mono(C1-C6 alkyl) amino group" refers to a (C1-C6 alkyl)-NH- group, in which the alkyl moiety is the above sense, and examples thereof include methylamino, ethylamino, isopropylamino, and tert-butylamino groups.

In the present invention, a "di(C1-C6 alkyl) amino group" refers to a (C1-C6 alkyl)₂-N- group, in which the alkyl moiety is the above sense, and examples thereof include dimethylamino, diethylamino, N-ethyl-N-methylamino, and diisopropylamino groups.

Next, a control method of a small grain cereals disease according to the present invention will be described in detail.

The control method of a small grain cereals disease of the present invention includes a step of treating seed of small grain cereals with one or two or more selected from a dichloroisothiazole compound or a salt thereof. The "dichloroisothiazole compound" means a compound having a dichloroisothiazole skeleton.

The dichloroisothiazole compound or the salt thereof used in the present invention is preferably a 3,4-dichloroisothiazole derivative or a salt thereof represented by the following Formula (1): 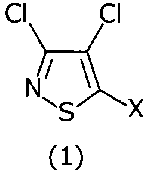
in Formula (1), X is any one of groups represented by Formulas (2) to (8), 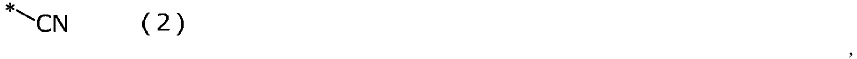 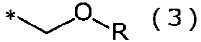
in Formula (3), R is a hydrogen atom; a (C1-C6) alkylcarbonyl group which may be substituted; a (C3-C6) cycloalkylcarbonyl group which may be substituted; a (C2-C6) alkenylcarbonyl group which may be substituted; a (C2-C6) alkynylcarbonyl group which may be substituted; a nitrogen-containing condensed heterocyclic group which may be substituted; or a benzoyl group which may be substituted with a substituent α, 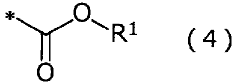
in Formula (4), R¹ is a hydrogen atom; a (C1-C6) alkyl group which may be substituted; a (C3-C6) cycloalkyl group which may be substituted; a (C2-C6) alkenyl group which may be substituted; or a (C2-C6) alkynyl group which may be substituted, 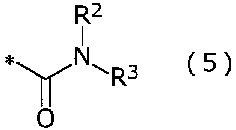
in Formula (5), R² and R³ are each independently a hydrogen atom; a (C1-C6) alkyl group which may be substituted; a (C3-C6) cycloalkyl group which may be substituted; a (C2-C6) alkenyl group which may be substituted; a (C2-C6) alkynyl group which may be substituted; or a phenyl group which may be substituted with a substituent α; or R² and R³ may bond to form a 4-6 membered heterocycle, and the heterocycle may be substituted, 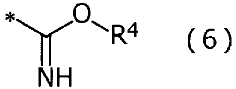
in Formula (6), R⁴ is a (C1-C6) alkyl group which may be substituted; a (C3-C6) cycloalkyl group which may be substituted; a (C2-C6) alkenyl group which may be substituted; a (C2-C6) alkynyl group which may be substituted; or a benzyl group which may be substituted with a substituent α, 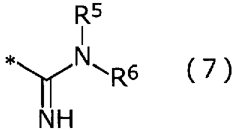
in Formula (7), R⁵ and R⁶ are each independently a hydrogen atom; a (C1-C6) alkyl group which may be substituted; a (C3-C6) cycloalkyl group which may be substituted; a (C2-C6) alkenyl group which may be substituted; a (C2-C6) alkynyl group which may be substituted; or a phenyl group which may be substituted with a substituent α; or R⁵ and R⁶ may bond to form a 4-6 membered heterocycle, and the heterocycle may be substituted, 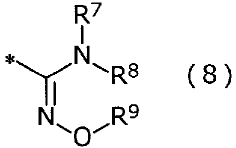
in Formula (8), R⁷ and R⁸ are each independently a hydrogen atom; a (C1-C6) alkyl group which may be substituted; a (C3-C6) cycloalkyl group which may be substituted; a (C2-C6) alkenyl group which may be substituted; a (C2-C6) alkynyl group which may be substituted; or a phenyl group which may be substituted with a substituent α; or R⁷ and R⁸ may bond to form a 4-6 membered heterocycle, and the heterocycle may be substituted, and R⁹ is a hydrogen atom; a (C1-C6) alkyl group which may be substituted; a (C3-C6) cycloalkyl group which may be substituted; a (C2-C6) alkenyl group which may be substituted; or a (C2-C6) alkynyl group which may be substituted, and
the substituent α is a (C1-C6) alkyl group, a (C3-C6) cycloalkyl group, a (C1-C6) haloalkyl group, a phenyl group, a halogen atom, a cyano group, a nitro group, a hydroxyl group, a (C1-C6) alkoxy group, a (C1-C5) acyl group, a carboxyl group, a (C1-C6) alkoxycarbonyl group, a mono(C1-C6 alkyl) carbamoyl group, a di(C1-C6 alkyl) carbamoyl group, an amino group, a mono(C1-C6 alkyl) amino group, or a di(C1-C6 alkyl) amino group.

In the group represented by the above Formula (3), R is preferably a hydrogen atom, a (C1-C6) alkylcarbonyl group which may be substituted, a benzoyl group which may be substituted with a substituent α,or a nitrogen-containing condensed heterocyclic group which may be substituted.

In the group represented by the above Formula (4), R¹ is preferably a hydrogen atom or a (C1-C6) alkyl group which may be substituted.

In the group represented by the above Formula (5), R² and R³ are preferably each independently a hydrogen atom or a phenyl group which may be substituted with a substituent α,and the substituent α is preferably a cyano group.

In the group represented by the above Formula (6), R⁴ is preferably a (C1-C6) alkyl group or a benzyl group.

In the group represented by the above Formula (7), R⁵ and R⁶ are preferably each independently a hydrogen atom, a (C1-C6) alkyl group, or a phenyl group.

In the group represented by the above Formula (8), each of R⁷, R⁸, and R⁹ is preferably a hydrogen atom.

Specific examples of the 3,4-dichloroisothiazole derivative or the salt thereof represented by the above Formula (1) include the following compounds:

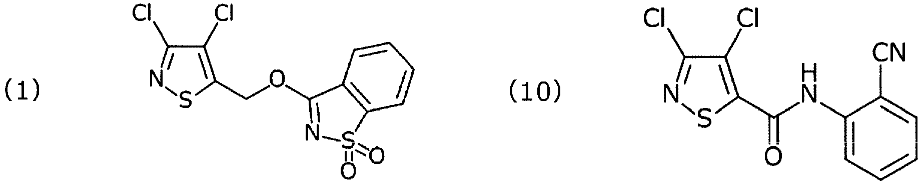

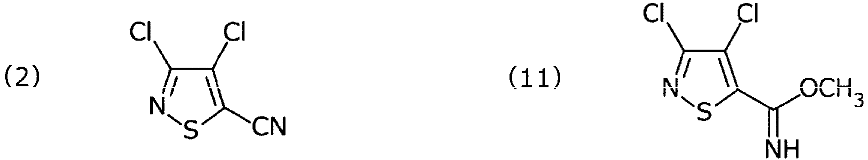

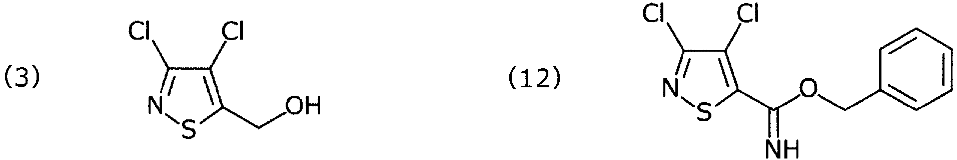

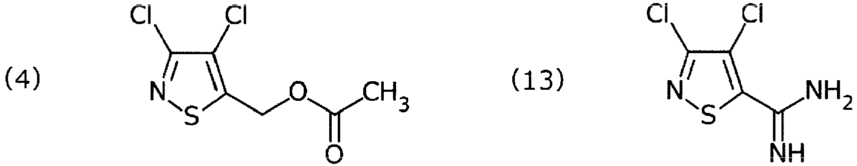

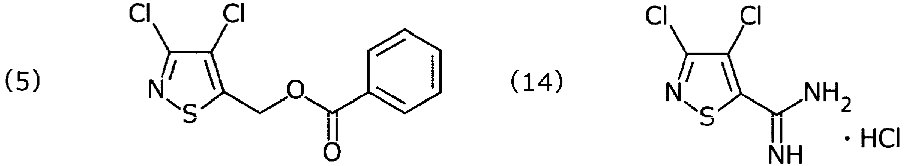

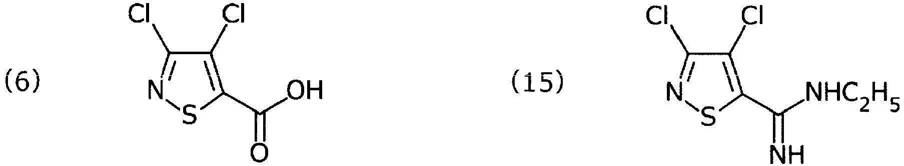

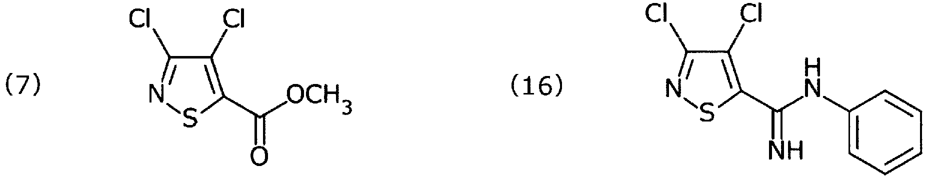

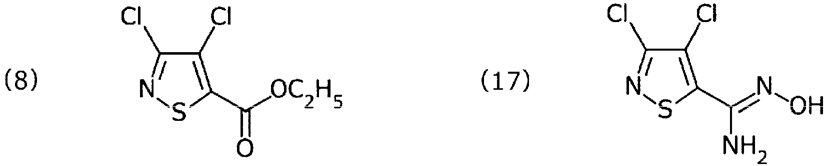

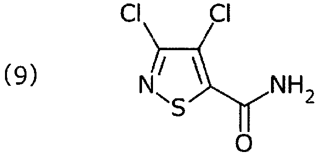

These compounds may be used alone or may be used in combination with two or more kinds thereof.

The above compounds (1) to (17) can be produced in accordance with the following methods, for example.

### <Compound (1): Dichlobentiazox>

The compound (1) can be produced in accordance with the method described in WO 2007/129454.

### <Compound (2)>

The compound (2) can be produced in accordance with the method described in US 3,341,547.

### <Compound (3)>

The compound (3) can be produced in accordance with the method described in WO 2007/129454.

### <Compound (4)>

The compound (4) can be produced in accordance with the method described in WO 2008/007459.

### <Compound (5)>

The compound (5) can be produced in accordance with the method described in WO 2008/007459.

### <Compound (6)>

The compound (6) can be produced in accordance with the method described in US 3,341,547.

### <Compound (7)>

The compound (7) can be produced in accordance with the method described in WO 2001/055124.

### <Compound (8)>

The compound (8) can be produced in accordance with the method described in US 4,132,676.

### <Compound (9)>

The compound (9) can be produced in accordance with the method described in US 3,341,547.

### <Compound (10): Isotianil>

The compound (10) can be produced in accordance with the method described in WO 99/24413.

### <Compound (11)>

The compound (11) can be produced in accordance with the method described in US 3,341,547 from 3,4-dichloroisothiazole-5-carbonitrile and methanol. mp. 70-71°C (colorless crystal), ¹H-NMR (400 MHz, CDCl₃) δ ppm: 3.94 (s, 3H), 8.65 (bs, 1H).

### <Compound (12)>

The compound (12) can be produced in accordance with the method described in US 3,341,547 from 3,4-dichloroisothiazole-5-carbonitrile and benzyl alcohol. mp. 52-53°C (colorless crystal), ¹H-NMR (400 MHz, CDCl₃) δ ppm: 5.38 (s, 2H), 7.35-7.44 (m, 5H), 8.76 (bs, 1H).

### <Compound (13)>

The compound (13) can be produced in accordance with a general organic synthetic chemistry technique by neutralizing the compound (14) in ethyl acetate with a sodium carbonate aqueous solution. mp. 139-142°C (colorless powder), ¹H-NMR (400 MHz, CDCl₃) δ ppm: 5.49 (bs, 3H).

### <Compound (14)>

The compound (14) can be produced in accordance with the method described in European Journal of Medicinal Chemistry, 1989, vol. 24, p. 427-434 from the compound (11) and ammonium chloride. mp. 198-201°C (colorless powder), ¹H-NMR (400 MHz, DMSO-d₆) δ ppm: 7.94 (bs, 2H), 9.92 (bs, 2H).

### <Compound (15)>

The compound (15) can be produced in accordance with the method described in European Journal of Medicinal Chemistry, 1989, vol. 24, p. 427-434 from the compound (11) and ethylamine hydrochloride. mp. 99-101°C (colorless powder), ¹H-NMR (400 MHz, CDCl₃) δ ppm: 1.31 (s, 3H, t, J=7.32 Hz), 3.25 (s, 2H, q, J=7.32 Hz), 5.50 (bs, 2H).

### <Compound (16)>

The compound (16) can be produced in accordance with the method described in European Journal of Medicinal Chemistry, 1989, vol. 24, p. 427-434 from the compound (11) and aniline hydrochloride. mp. 139-140°C (pale yellow crystal), ¹H-NMR (400 MHz, CDCl₃) δ ppm: 5.45 (bs, 2H), 5.96-7.41 (m, 5H).

### <Compound (17)>

The compound (17) can be produced in accordance with the method described in CN 104649996.

It has been known that these compounds are used for small grain cereals in foliage treatment after seeding, but it has not been known that these compounds are used in seed treatment before seeding.

The amount of the dichloroisothiazole compound or the salt thereof described above with which seed of small grain cereals is treated is preferably from 0.01 g to 10 g, and more preferably from 0.5 to 5 g with respect to 1 kg of the seed of small grain cereals.

Examples of a method for treating the seed of small grain cereals with the dichloroisothiazole compound or the salt thereof described above include dust coating, smearing (coating), spraying (blasting), and immersing. Specifically, a method in which the above compound or the salt or a suspension obtained by diluting the above compound or the salt with water is smeared (coated) on the seed of small grain cereals, a method in which the suspension of the above compound or the salt is sprayed (blasted) on the seed of small grain cereals, a method in which the seed of small grain cereals is immersed in the suspension of the above compound or the salt, or a method in which the seed of small grain cereals is dust coated with powder of the above compound or the salt may be applied.

In the method in which the suspension of the above compound or the salt is smeared (coated) on the seed of small grain cereals, from 0.1 ml to 200 ml, preferably from 0.5 ml to 100 ml of the suspension is preferably used with respect to 1 kg of the seed of small grain cereals.

In the method in which the seed of small grain cereals is immersed in the suspension of the above compound or the salt, the suspension is preferably used at a bath ratio of from 1:1 to 1:5 with respect to the seed of small grain cereals.

In the method in which the suspension of the above compound or the salt is sprayed (blasted) on the seed of small grain cereals, from 1 ml to 100 ml, more preferably from 10 ml to 50 ml of the suspension is preferably used with respect to 1 kg of the seed of small grain cereals.

In the method in which the seed of small grain cereals is dust coated with powder of the above compound or the salt, from 1 g to 100 g of the powder is preferably used with respect to 1 kg of the seed of small grain cereals. In this method, for example, the seed of small grain cereals and the powder of the above compound or the salt may be put in a container and stirred such that the powder of the above compound or the salt are made to adhere to the surface of the seed.

Among the above treatment methods, the method in which the suspension of the above compound or the salt is smeared or sprayed on the seed of small grain cereals is preferable.

Regarding the dichloroisothiazole compound or the salt thereof used in the present invention, the seed of small grain cereals may be treated with the compound or the salt thereof as it is, or the seed of small grain cereals may be treated with a mixture obtained by mixing the compound or the salt thereof with a coating agent. Examples of the coating agent include one idiomatically used in seed treatment, such as iron powder, calcium peroxide, and a molybdenum compound.

Moreover, if necessary, the dichloroisothiazole compound or the salt thereof used in the present invention can be blended with a carrier and another auxiliary agent, and used after formulation into a preparation form normally used as a seed treatment agent, for example, a solid preparation such as dust, wettable powder, or water dispersible granule, or a liquid preparation such as liquid, emulsifiable concentrate, flowable, or emulsion. The carrier and another auxiliary agent herein collectively mean synthetic or natural, inorganic or organic substances blended into the preparation for helping delivery of active compounds as active ingredients to plants by controlling the elution and for making storage, transportation, or handling easy.

The method for controlling a small grain cereals disease of the present invention can be used for any seed of small grain cereals, for example, wheat, barley, rye, and oat, and, in particular, is effectively used for seed of wheat. Moreover, the method for controlling a small grain cereals disease of the present invention can be applied in a place where one type or multiple types of small grain cereals grow.

A time when the seed of small grain cereals is treated with the dichloroisothiazole compound used in the present invention may be any time between just after harvesting and obtaining the seed and just before seeding, and the treated seed may be preserved in a dry state, or, before seeding, the seed may be treated after absorbing water, and then sown.

In the case of preserving the seed of small grain cereals, which has been treated with the dichloroisothiazole compound or the salt thereof used in the present invention, the seed of small grain cereals can be preserved by a normal method without being particularly limited as long as it is in a dry state.

When the seed of small grain cereals is treated with the dichloroisothiazole compound or the salt thereof used in the present invention, one or two or more selected from a fungicide, an insecticide, a miticide, a nematicide, a herbicide, and a plant growth regulator as other agrochemical active ingredients, and a safener can be further used in combination.

Examples of the fungicide include, but are not limited to, a strobilurin-based compound, an anilinopyrimidine-based compound, an azole-based compound, a dithiocarbamate-based compound, a phenylcarbamate-based compound, an organochlorine-based compound, a benzimidazole-based compound, a phenylamido-based compound, a sulfenic acid-based compound, a copper-based compound, an isoxazole-based compound, an organophosphorus-based compound, a N-halogenothioalkyl-based compound, a carboxyanilide-based compound, a morpholine-based compound, an organotin-based compound, and/or a cyanopyrrol-based compound.

Examples of the insecticide, the miticide, and the nematicide include, but are not limited to, a pyrethroid-based compound, an organophosphorus-based compound, an oxime-carbamate-based compound, a carbamate-based compound, a neonicotinoid-based compound, a diacylhydrazine-based compound, a benzoylurea-based compound, a juvenile hormone-based compound, a cyclodiene organochlorine-based compound, a 2-dimethylaminopropane-1,3-dithiol-based compound, an amidine-based compound, a phenylpyrazole-based compound, an organotin-based compound, a METI-based compound, a benzylate-based compound, an allylpyrrol-based compound, a dinitrophenol-based compound, an anthranil-diamide-based compound, an oxadiazine-based compound, a semicarbazone-based compound, a tetronic acid-based compound, a carbamoyltriazole-based compound, and/or a tetrazine-based compound.

Examples of the herbicide and the plant growth regulator include, but are not limited to, a phenoxy-based compound, a bipyridinium-based compound, a urea-based compound, a sulfonylurea-based compound, a fatty acid-based compound, an acid amide-based compound, a triazine-based compound, a nitrile-based compound, an uracil-based compound, a carbamate-based compound, an aniline-based compound, an organophosphorus-based compound, and an amino acid-based compound.

Specifically, examples include the following compounds.

Examples of the fungicide include azaconazole, acibenzolar-S-methyl, azoxystrobin, anilazine, amisulbrom, ametoctradin, aldimorph, isopyrazam, isofetamid, isoprothiolane, ipconazole, iprodione, iprovalicarb, iprobenfos, imazalil, iminoctadine-trialbesilate, iminoctadine-triacetate, imibenconazole, edifenphos, etaconazole, ethaboxam, ethirimol, ethoxyquin, etridiazole, enestroburin, enoxastrobin, epoxiconazole, organic oils, oxadixyl, oxazinylazole, oxathiapiprolin, oxycarboxin, oxine-copper, oxytetracycline, oxpoconazole-fumarate, oxolinic acid, copper dioctanoate, octhilinone, ofurace, orysastrobin, o-phenylphenol, kasugamycin, captafol, carpropamid, carbendazim, carboxin, carvone, quinoxyfen, quinofumelin, chinomethionat, captan, quinconazole, quintozene, guazatine, cufraneb, coumoxystrobin, kresoxim-methyl, clozylacon, chlozolinate, chlorothalonil, chloroneb, cyazofamid, diethofencarb, diclocymet, dichlofluanid, diclomezine, dicloran, dichlorophen, dithianon, diniconazole, diniconazole-M, zineb, dinocap, dipymetitrone, diphenylamine, difenoconazole, cyflufenamid, diflumetorim, cyproconazole, cyprodinil, simeconazole, dimethirimol, dimethyl disulfide, dimethomorph, cymoxanil, dimoxystrobin, ziram, silthiofam, streptomycin, spiroxamine, sedaxane, zoxamide, dazomet, tiadinil, thiabendazole, thiram, thiophanate, thiophanate-methyl, thifluzamide, tecnazene, tecloftalam, tetraconazole, debacarb, tebuconazole, tebufloquin, terbinafine, dodine, dodemorph, triadimenol, triadimefon, triazoxide, trichlamide, triclopyricarb, tricyclazole, triticonazole, tridemorph, triflumizole, trifloxystrobin, triforine, tolylfluanid, tolclofos-methyl, tolnifanide, tolprocarb, nabam, natamycin, naftifine, nitrapyrin, nitrothal-isopropyl, nuarimol, copper nonyl phenol sulphonate, Bacillus subtilis (strain: QST 713), validamycin, valifenalate, picarbutrazox, bixafen, picoxystrobin, pydiflumetofen, bitertanol, binapacryl, biphenyl, piperalin, hymexazol, pyraoxystrobin, pyraclostrobin, pyraziflumid, pyrazophos, pyrametostrobin, pyriofenone, pyrisoxazole, pyrifenox, pyributicarb, pyribencarb, pyrimethanil, pyroquilon, vinclozolin, ferbam, famoxadone, phenazine oxide, fenamidone, fenaminstrobin, fenarimol, fenoxanil, ferimzone, fenpiclonil, fenpicoxamid, fenpyrazamine, fenbuconazole, fenfuram, fenpropidin, fenpropimorph, fenhexamid, folpet, phthalide, bupirimate, fuberidazole, blasticidin-S, furametpyr, furalaxyl, furancarboxylic acid, fluazinam, fluindapyr, fluoxastrobin, fluopicolide, fluopyram, fluoroimide, fluxapyroxad, fluquinconazole, furconazole, furconazole-cis, fludioxonil, flusilazole, flusulfamide, flutianil, flutolanil, flutriafol, flufenoxystrobin, flumetover, flumorph, proquinazid, prochloraz, procymidone, prothiocarb, prothioconazole, bronopol, propamocarb-hydrochloride, propiconazole, propineb, probenazole, bromuconazole, hexaconazole, benalaxyl, benalaxyl-M, benodanil, benomyl, pefurazoate, penconazole, pencycuron, benzovindiflupyr, benthiazole, benthiavalicarb-isopropyl, penthiopyrad, penflufen, boscalid, fosetyl (aluminium, calcium, sodium), polyoxin, polycarbamate, Bordeaux mixture, mancozeb, mandipropamid, mandestrobin, maneb, myclobutanil, mineral oils, mildiomycin, methasulfocarb, metam, metalaxyl, metalaxyl-M, metiram, metconazole, metominostrobin, metrafenone, mepanipyrim, mefentrifluconazole, meptyldinocap, mepronil, iodocarb, laminarin, phosphorous acid and salts, copper oxychloride, silver, cuprous oxide, copper hydroxide, potassium bicarbonate, sodium bicarbonate, sulfur, oxyquinoline sulfate, copper sulfate, (3,4-dichloroisothiazole-5-yl)methyl 4-(tert-butyl)benzoate (Chemical Name, CAS Registered Number: 1231214-23-5), BAF-045 (Code Number), BAG-010 (Code Number), UK-2A (Code Number), DBEDC (dodecylbenzenesulfonic acid bisethylenediamine copper complex salt [II]), MIF-1002 (Code Number), TPTA (triphenyltin acetate), TPTC (triphenyltin chloride), TPTH (triphenyltin hydroxide), and non-pathogenic Erwinia carotovora.

Examples of the insecticide, the miticide, and the nematicide include acrinathrin, azadirachtin, azamethiphos, azinphos-ethyl, azinphos-methyl, acequinocyl, acetamiprid, acetoprole, acephate, azocyclotin, abamectin, afidopyropen, afoxolaner, amidoflumet, amitraz, alanycarb, aldicarb, aldoxycarb, allethrin [including d-cis-trans-isomer, d-trans-isomer], isazophos, isamidofos, isocarbophos, isoxathion, isofenphos-methyl, isoprocarb, ivermectin, imicyafos, imidacloprid, imiprothrin, indoxacarb, esfenvalerate, ethiofencarb, ethion, ethiprole, ethylene dibromide, etoxazole, etofenprox, ethoprophos, etrimfos, emamectin benzoate, endosulfan, empenthrin, oxazosulfyl, oxamyl, oxydemeton-methyl, oxydeprofos, omethoate, cadusafos, kappa-tefluthrin, kappa-bifenthrin, kadethrin, karanjin, cartap, carbaryl, carbosulfan, carbofuran, gamma-BHC, xylylcarb, quinalphos, kinoprene, chinomethionat, coumaphos, cryolite, clothianidin, clofentezine, chromafenozide, chlorantraniliprole, chlorethoxyfos, chlordane, chloropicrin, chlorpyrifos, chlorpyrifos-methyl, chlorfenapyr, chlorfenvinphos, chlorfluazuron, chlormephos, chloroprallethrin, cyanophos, diafenthiuron, diamidafos, cyantraniliprole, dienochlor, cyenopyrafen, dioxabenzofos, diofenolan, cyclaniliprole, dicrotophos, dichlofenthion, cycloprothrin, dichlorvos, 1,3-dichloropropene, dicloromezotiaz, dicofol, dicyclanil, disulfoton, dinotefuran, dinobuton, cyhalodiamide, cyhalothrin [including gamma-isomer, lambda-isomer], cyphenothrin [including (1R)-trans-isomer], cyfluthrin [including beta-isomer], diflubenzuron, cyflumetofen, diflovidazin, cyhexatin, cypermethrin [including alpha-isomer, beta-isomer, theta-isomer, zeta-isomer], dimethylvinphos, dimefhithrin, dimethoate, silafluofen, cyromazine, spinetoram, spinosad, spirodiclofen, spirotetramat, spiromesifen, sulcofuron-sodium, sulfluramid, sulfoxaflor, sulfotep, diazinon, thiacloprid, thiamethoxam, tioxazafen, thiodicarb, thiocyclam, thiosultap, thionazin, thiofanox, thiometon, tetrachlorvinphos, tetradifon, tetraniliprole, tetramethylfluthrin, tetramethrin, tebupirimfos, tebufenozide, tebufenpyrad, tefluthrin, teflubenzuron, demeton-S-methyl, temephos, deltamethrin, terbufos, tralomethrin, transfluthrin, triazamate, triazophos, trichlorfon, triflumuron, triflumezopyrim, trimethacarb, tolfenpyrad, naled, nitenpyram, novaluron, noviflumuron, Verticillium lecanii, hydroprene, Pasteuria penetrans spore (Pasteuria penetrans), vamidothion, parathion, parathion-methyl, halfenprox, halofenozide, bioallethrin, bioallethrin S-cyclopentenyl, bioresmethrin, bistrifluron, hydramethylnon, bifenazate, bifenthrin, pyflubumide, piperonyl butoxide, pymetrozine, pyraclofos, pyrafluprole, pyridaphenthion, pyridaben, pyridalyl, pyrifluquinazon, pyriprole, pyriproxyfen, pirimicarb, pyrimidifen, pyriminostrobin, pirimiphos-methyl, pyrethrine, famphur, fipronil, fenazaquin, fenamiphos, fenitrothion, fenoxycarb, fenothiocarb, phenothrin [including (1R)-trans-isomer], fenobucarb, fenthion, phenthoate, fenvalerate, fenpyroximate, fenbutatin oxide, fenpropathrin, fonofos, sulfuryl fluoride, butocarboxim, butoxycarboxim, buprofezin, furathiocarb, prallethrin, fluacrypyrim, fluazaindolizine, fluazuron, fluensulfone, sodium fluoroacetate, fluxametamide, flucycloxuron, flucythrinate, flusulfamide, fluvalinate [including tau-isomer], flupyradifurone, flupyrazofos, flufiprole, flupyrimin, flufenerim, flufenoxystrobin, flufenoxuron, fluhexafon, flubendiamide, flumethrin, fluralaner, prothiofos, protrifenbute, flonicamid, propaphos, propargite, profenofos, broflanilide, brofluthrinate, profluthrin, propetamphos, propoxur, flometoquin, bromopropylate, hexythiazox, hexaflumuron, Paecilomyces tenuipes, Paecilomyces fumosoroceus, heptafluthrin, heptenophos, permethrin, benclothiaz, bensultap, benzoximate, bendiocarb, benfuracarb, Beauveria tenella, Beauveria bassiana, Beauveria brongniartii, phoxim, phosalone, fosthiazate, fosthietan, phosphamidon, phosmet, polynactins, formetanate, phorate, malathion, milbemectin, mecarbam, mesulfenfos, methoprene, methomyl, metaflumizone, methamidophos, metham, methiocarb, methidathion, methyl isothiocyanate, methyl bromide, methoxychlor, methoxyfenozide, methothrin, metofluthrin, epsilon-metofluthrin, metolcarb, mevinphos, meperfluthrin, Monacrosporium phymatophagum, monocrotophos, momfluorothrin, epsilon-momfluorothrin, litlure-A, litlure-B, aluminium phosphide, zinc phosphide, phosphine, lufenuron, rescalure, resmethrin, lepimectin, rotenone, fenbutatin oxide, calcium cyanide, nicotinesulfate, (Z)-11 -tetradecenyl=acetate, (Z)-11 -hexadecenal, (Z)-11-hexadecenyl=acetate, (Z)-9,12-tetradecadienyl=acetate, (Z)-9-tetradecen-1-ol, (Z, E)-9,11-tetradecadienyl=acetate, (Z, E)-9,12-tetradecadienyl=acetate, Bacillus popilliae, Bacillus subtillis, Bacillus sphaericus, Bacillus thuringiensis subsp. aizawai, Bacillus thuringiensis subsp. israelensis, Bacillus thuringiensis subsp. kurstaki, Bacillus thuringiensis subsp. tenebrionis, Bt protein (Cry1Ab, Cry1Ac, Cry1Fa, Cry2Ab, mCry3A, Cry3Ab, Cry3Bb, Cry34/35Ab1), CL900167 (Code Number), DCIP (bis-(2-chloro-1-methylethyl)ether), DDT (1,1,1-trichloro-2,2-bis(4-chlorophenyl)ethane), DEP (dimethyl-2,2,2-trichloro-1-hydroxyethylphosphonate), DNOC (4,6-dinitro-o-cresol), DSP (O,O-diethyl-O-[4-(dimethylsulfamoyl)phenyl]phosphorothionate), EPN (O-ethyl O-(4-nitrophenyl)phenylphosphonothioate), nuclear polyhedrosis virus occlusion body, NA-85 (Code Number), NA-89 (Code Number), NC-515 (Code Number), XMC, Z-13-icosen-10-one, and ZXI8901 (Code Number), (RS)-2-chloro-4-fluoro-5-[5-(trifluoromethylthio)pentyloxy]phenyl-2,2,2-trifluoroethylsulfoxi de (Chemical name, CAS Resistered Number:1472050-04-6).

Examples of the herbicide include ioxynil, aclonifen, acrolein, azafenidin, acifluorfen (including a salt with sodium or the like), azimsulfuron, asulam, acetochlor, atrazine, anilofos, amicarbazone, amidosulfuron, amitrole, aminocyclopyrachlor, aminopyralid, amiprofos-methyl, ametryn, alachlor, alloxydim, isouron, isoxachlortole, isoxaflutole, isoxaben, isoproturon, ipfencarbazone, imazaquin, imazapic (including a salt with amine or the like), imazapyr (including a salt of isopropylamine or the like), imazamethabenz-methyl, imazamox, imazethapyr, imazosulfuron, indaziflam, indanofan, eglinazine-ethyl, esprocarb, ethametsulfuron-methyl, ethalfluralin, ethidimuron, ethoxysulfuron, ethoxyfen-ethyl, ethofumesate, etobenzanid, endothal-disodium, oxadiazon, oxadiargyl, oxaziclomefone, oxasulfuron, oxyfluorfen, oryzalin, orthosulfamuron, orbencarb, oleic acid, cafenstrole, carfentrazone-ethyl, karbutilate, carbetamide, quizalofop-ethyl, quizalofop-P-ethyl, quizalofop-P-tefuryl, quinoclamine, quinclorac, quinmerac, cumyluron, clacyfos, glyphosate (including a salt of sodium, potassium, ammonium, amine, propylamine, isopropylamine, dimethylamine, trimesium, or the like), glufosinate (including a salt of amine, sodium, or the like), glufosinate-P-sodium, clethodim, clodinafop-propargyl, clopyralid, clomazone, chlomethoxyfen, clomeprop, cloransulam-methyl, chloramben, chloridazon, chlorimuron-ethyl, chlorsulfuron, chlorthal-dimethyl, chlorthiamid, chlorphthalim, chlorflurenol-methyl, chlorpropham, chlorbromuron, chloroxuron, chlorotoluron, ketospiradox (including a salt of sodium, calcium, ammonia, or the like), saflufenacil, sarmentine, cyanazine, cyanamide, diuron, diethatyl-ethyl, dicamba (including a salt of amine, diethylamine, isopropylamine, diglycolamine, sodium, lithium, or the like), cycloate, cycloxydim, diclosulam, cyclosulfamuron, cyclopyrimorate, dichlobenil, diclofop-P-methyl, diclofop-methyl, dichlorprop, dichlorprop-P, diquat, dithiopyr, siduron, dinitramine, cinidon-ethyl, cinosulfuron, dinoseb, dinoterb, cyhalofop-butyl, diphenamid, difenzoquat, diflufenican, diflufenzopyr, simazine, dimethachlor, dimethametryn, dimethenamid, dimethenamid-P, simetryn, dimepiperate, dimefuron, cinmethylin, swep, sulcotrione, sulfentrazone, sulfosate, sulfosulfuron, sulfometuron-methyl, sethoxydim, terbacil, daimuron, thaxtomin A, dalapon, thiazopyr, tiafenacil, thiencarbazone (including a sodium salt, methyl ester or the like), tiocarbazil, thiobencarb, thidiazimin, thifensulfuron-methyl, desmedipham, desmetryne, thenylchlor, tebutam, tebuthiuron, tepraloxydim, tefuryltrione, tembotrione, terbuthylazine, terbutryn, terbumeton, topramezone, tralkoxydim, triaziflam, triasulfuron, triafamone, tri-allate, trietazine, triclopyr, triclopyr-butotyl, tritosulfuron, trifludimoxazin, triflusulfuron-methyl, trifluralin, trifloxysulfuron-sodium, tribenuron-methyl, tolpyralate, naptalam (including a salt with sodium or the like), naproanilide, napropamide, napropamide-M, nicosulfuron, neburon, norflurazon, vernolate, halauxifen-benzyl, paraquat, halauxifen-methyl, haloxyfop, haloxyfop-P, haloxyfop-etotyl, halosafen, halosulfuron-methyl, picloram, picolinafen, bicyclopyrone, bispyribac-sodium, pinoxaden, bifenox, piperophos, pyraclonil, pyrasulfotole, pyrazoxyfen, pyrazosulfuron-ethyl, pyrazolynate, bilanafos, pyraflufen-ethyl, pyridafol, pyrithiobac-sodium, pyridate, pyriftalid, pyributicarb, pyribenzoxim, pyrimisulfan, pyriminobac-methyl, pyroxasulfone, pyroxsulam, phenisopham, fenuron, fenoxasulfone, fenoxaprop (including methyl ester, ethyl ester, isopropyl ester), fenoxaprop-P (including methyl ester, ethyl ester, isopropyl ester), fenquinotrione, fenthiaprop-ethyl, fentrazamide, phenmedipham, butachlor, butafenacil, butamifos, butylate, butenachlor, butralin, butroxydim, flazasulfuron, flamprop (including methyl ester, ethyl ester, isopropyl ester), flamprop-M (including methyl ester, ethyl ester, isopropyl ester), primisulfuron-methyl, fluazifop-butyl, fluazifop-P-butyl, fluazolate, fluometuron, fluoroglycofen-ethyl, flucarbazone-sodium, fluchloralin, flucetosulfuron, fluthiacet-methyl, flupyrsulfuron-methyl-sodium, flufenacet, flufenpyr-ethyl, flupropanate, flupoxame, flumioxazin, flumiclorac-pentyl, flumetsulam, fluridone, flurtamone, fluroxypyr, flurochloridone, pretilachlor, procarbazone-sodium, prodiamine, prosulfuron, prosulfocarb, propaquizafop, propachlor, propazine, propanil, propyzamide, propisochlor, propyrisulfuron, propham, profluazol, propoxycarbazone-sodium, profoxydim, bromacil, brompyrazon, prometryn, prometon, bromoxynil (including an ester of butyrate, octanoate, heptanoate, or the like), bromofenoxim, bromobutide, florasulam, florpyrauxifen, hexazinone, pethoxamid, benazolin, penoxsulam, heptamaloxyloglucan, beflubutamid, pebulate, pelargonic acid, bencarbazone, pendimethalin, benzfendizone, bensulide, bensulfuron-methyl, benzobicyclon, benzofenap, bentazone, pentanochlor, pentoxazone, benfluralin, benfuresate, fosamine, fomesafen, foramsulfuron, mecoprop (including a salt of sodium, potassium, isopropylamine, triethanolamine, dimethylamine or the like), mecoprop-P-potassium, mesosulfuron-methyl, mesotrione, metazachlor, metazosulfuron, methabenzthiazuron, metamitron, metamifop, DSMA (disodium methanearsonate), methiozolin, methyldymuron, metoxuron, metosulam, metsulfuron-methyl, metobromuron, metobenzuron, metolachlor, metribuzin, mefenacet, monosulfuron (including methyl ester, ethyl ester, isopropyl ester), monolinuron, molinate, iodosulfuron, iodosulfulon-methyl-sodium, iofensulfuron, iofensulfuron-sodium, lactofen, lancotrione, linuron, rimsulfuron, lenacil, 2,3,6-TBA (2,3,6-trichlorobenzoic acid), 2,4,5-T (2,4,5-trichlorophenoxyacetic acid), 2,4-D (2,4-dichlorophenoxyacetic acid) (including a salt of amine, diethylamine, triethanolamine, isopropylamine, sodium, lithium, or the like), 2,4-DB (4-(2,4-dichlorophenoxy)butyric acid), ACN (2-amino-3-chloro-1,4-paphthoquinone), AE-F-150944 (Code Number), DNOC (4,6-dinitro-o-cresol) (including a salt of amine, sodium, or the like), EPTC (S-ethyldipropylthiocarbamate), MCPA (2-methyl-4-chlorophenoxyacetic acid), MCPA-thioethyl, MCPB (2-methyl-4-chlorophenoxybutyric acid) (including a sodium salt, ethyl ester, or the like), HW-02 (Code Number), IR-6396 (Code Number), SYP-298 (Code Number), SYP-300 (Code Number), S-metolachlor, and TCA (2,2,2-trichloroacetic acid) (including a salt of sodium, calcium, ammonia, or the like).

Examples of the plant growth regulator include 1-naphthylacetamide, 1-methylcyclopropene, 2,6-diisopropylnaphthalene, 4-CPA (4-chlorophenoxyacetic acid), 4-oxo-4-(2-phenylethyl)aminobutyric acid (Chemical Name, CAS Registered Number: 1083-55-2), n-decanol, aviglycine, ancymidol, inabenfide, indole acetic acid, indole butyric acid, uniconazole, uniconazole-P, ethychlozate, ethephon, epocholeone, carvone, cloxyfonac, cloxyfonac-potassium, cloprop, chlormequat, cytokinins, cyclanilide, dikegulac, gibberellins, dimethipin, sintofen, daminozide, thidiazuron, triacontanol, trinexapac-ethyl, paclobutrazol, flumetralin, flurprimidol, flurenol, prohydrojasmon, prohexadione-calcium, benzylaminopurine, forchlorfenuron, maleic hydrazide, mepiquat chloride, mefluidide, and calcium peroxide.

Examples of the safener include isoxadifen, isoxadifen-ethyl, oxabetrinil, cloquintcet-mexyl, cyometrinil, dichlormid, dicyclonone, cyprosulfamide, 1,8-Naphthalic Anhydride, fenchlorazole-ethyl, fenclorim, furilazole, fluxofenim, flurazole, benoxacor, mefenpyr, mefenpyr-ethyl, mefenpyr-diethyl, lower alkyl-substituted benzoic acid, PPG-1292 (2,2-dichloro-N-(1,3-dioxan-2-ylmethyl)-N-(2-propenyl)acetamide), MG-191 (2-dichloromethyl-2-methyl-1,3-dioxan), R-29148 (3-dichloroacetyl-2,2,5-trimethyl-1,3-oxazolidine), AD-67 (4-dichloroacetyl-1-oxa-4-azaspiro[4.5]decane), N-(2-methoxybenzoyl)-4-[(methylaminocarbonyl)amino]benzenesulfonamide (Chemical Name, CAS Registered Number: 129531-12-0), DKA-24 (N1,N2-diallyl-N2-dichloroacetylglycinamide), and TI-35 (1-dichloroacetylazepane).

In the method in which the agrochemical active ingredients such as the fungicide, the insecticide, the miticide, the nematicide, the herbicide, and the plant growth regulator, and the safener are used in combination with the dichloroisothiazole compound or the salt thereof used in the present invention, the seed of small grain cereals may be treated with the above-described agrochemical active ingredients and safener at the same time or around the time when the seed of small grain cereals is treated with the dichloroisothiazole compound or the salt thereof used in the present invention, or a preparation form is obtained by mixing the dichloroisothiazole compound or the salt thereof used in the present invention with the above-described agrochemical active ingredients and safener, and the seed of small grain cereals may be treated with the preparation. Furthermore, small grain cereals cultivated by sowing the seed treated by the method of the present invention and field soil thereof may be treated with the above-described agrochemical active ingredients and safener.

The seed of small grain cereals treated with the dichloroisothiazole compound or the salt thereof according to the present invention can be sown and cultivated by a method same as that generally performed. By performing the cultivation in this manner, the occurrence of a small grain cereals disease, mainly, powdery mildew, leaf rust, septoria leaf blotch, or eye spot, which occurs in the latter half of a cultivation period and becomes a problem, is extremely reduced, and a high disease control effect by the method of the present invention is exerted.

Moreover, in the small grain cereals cultivated from the seed treated by the method of the present invention, yield components such as an ear length, the number of small grain cereals per head, and the number of ears are not varied, and only a culm length becomes shorter. The lodging resistance is improved because the thickness and the strength of a stem do not change, and the lodging damage during a small grain cereals-filling period, which occurs due to a variety of causes such as the weight of an ear due to small grain cereals filling, fertility management conditions, cultivation conditions, weather conditions such as rainfall and strong wind, and the occurrence of eye spot, is also reduced. Therefore, as a method for suppressing lodging damage of small grain cereals of the present invention, the seed of small grain cereals may be treated with the above compound.

### EXAMPLES

Hereinafter, the present invention will be described in detail by test examples, but the present invention is not limited to the test examples. It is to be noted that, in the following test examples, "parts" means parts by mass, and "%" means % by mass, respectively.

### (Test Example 1) Control Test of Wheat Powdery Mildew

Seed of wheat (variety: Haruyutaka) sterilized in advance with commercial Benlate T wettable powder 20 ("Benlate" is a registered trademark) was used. In Example 1, seed having a mass of 1 kg was mixed into 100 ml of suspension water containing 5 g of dichlobentiazox, air-dried, and then, stripe-sown in a field with a furrow width of 30 cm and a ratio of 163 kg/ha (417 seeds/m²). In contrast, in Comparative Example 1, seed which had not treated with dichlobentiazox was sown in a field in the same manner, and a spray solution corresponding to that obtained by suspending 500 g of dichlobentiazox in 200 liters of water per 1 ha was sprayed on foliage of wheat three times, during an ear emergence period (63 days after seeding), a flowering period (70 days after seeding), and a flowering end period (77 days after seeding). Similarly, in place of 500 g of dichlobentiazox in Comparative Example 1, 250 g of azoxystrobin (commercial Amistar 20 flowable was used, "Amistar" is a registered trademark) was used in Comparative Example 2, and 125 g of propiconazole (commercial Tilt emulsifiable concentrate 25 was used, "Tilt" is a registered trademark) was used in Comparative Example 3. The presence or absence of disease occurrence and a lesion area ratio of powdery mildew in flag leaves of 30 stems were investigated 79 days after seeding according to the criteria in Table 1, and a disease leaf rate and the degree of disease occurrence were calculated by the following calculation formula (1). The result is shown in Table 2.

**[Table 1]**

| Index | Lesion Area Ratio of Flag Leaves |
|---|---|
| 0 | Absence of Lesion |
| 1 | Lesion Area of less than 5% |
| 2 | Lesion Area of 5% or more and less than 33% |
| 3 | Lesion Area of 33% or more and less than 67% |
| 4 | Lesion Area of 67% or more |

Degree of Disease Occurrence = Σ(Index × Number of Leaves of Index)/(4 × Number of Investigated Leaves) × 100

**[Table 2]**

| | Active Ingredient | Treatment Method | Amount of Chemical Treated of Active Ingredient | Disease Leaf Rate (%) | Degree of Disease Occurrence |
|---|---|---|---|---|---|
| Example 1 | Dichlobentiazox | Seed Treatment | 5 g/Seed 1 kg (Corresponding to 815 g/ha) | 4.4 | 0.6 |
| Comparative Example 1 | Dichlobentiazox | Foliage Treatment | Spray 500 g/ha Three Times | 58.9 | 12.6 |
| Comparative Example 2 | Azoxystrobin | Foliage Treatment | Spray 250 g/ha Three Times | 90.0 | 17.6 |
| Comparative Example 3 | Propiconazole | Foliage Treatment | Spray 125 g/ha Three Times | 32.2 | 4.4 |
| Comparative Example 4 | None | - | - | 83.3 | 15.7 |

In wheat of Example 1 cultivated by treating seed with dichlobentiazox, despite the smaller amount of the treatment chemical was used compared to Comparative Example 1, the disease occurrence of powdery mildew was more suppressed than wheat of Comparative Example 1, which was subjected to the foliage treatment by spraying of dichlobentiazox during growth. Furthermore, in the seed treatment with dichlobentiazox, the disease occurrence of powdery mildew was more suppressed than the foliage treatment by spraying of azoxystrobin and propiconazole (Comparative Examples 2 and 3) practically used for controlling powdery mildew.

### (Test Example 2) Control Test of Wheat Powdery Mildew

Seed having a mass of 1 kg of wheat (variety: Norin No. 61) was mixed into 100 ml of suspension water containing 5 g or 0.5 g of dichlobentiazox or isotianil (commercial Routine flowable was used, "Routine" is a registered trademark) and air-dried, and then, 15 seeds were sown in a plastic pot of 9 cm × 9 cm containing horticultural soil and managed in a greenhouse. The number of emerged seeds was investigated 10 days after seeding, and an emergence rate was calculated (Examples 2 to 5). On day 49 after seeding, conidiospores of powdery mildew were sifted over leaves of wheat seedlings and inoculated onto the leaves, a lesion area ratio of powdery mildew in a first leaf was investigated 59 days after seeding according to the criteria in Table 1, and the degree of disease occurrence was calculated by the above calculation formula (1). The result of the emergence rate and the degree of disease occurrence of powdery mildew is shown in Table 3.

**[Table 3]**

| | Active Ingredient | Treatment Method | Amount of Chemical Treated of Active Ingredient | Emergence Rate (%) | Degree of Disease Occurrence |
|---|---|---|---|---|---|
| Example 2 | Dichlobentiazox | Seed Treatment | 5 g/Seed 1 kg (Corresponding to 500 g/ha) | 96 | 0.0 |
| Example 3 | Dichlobentiazox | Seed Treatment | 0.5 g/Seed 1 kg (Corresponding to 50 g/ha) | 100 | 10.7 |
| Example 4 | Isotianil | Seed Treatment | 5 g/Seed 1 kg (Corresponding to 500 g/ha) | 100 | 7.1 |
| Example 5 | Isotianil | Seed Treatment | 0.5 g/Seed 1 kg (Corresponding to 50 g/ha) | 96 | 7.6 |
| Comparative Example 5 | None | - | - | 96 | 34.4 |

In wheat cultivated by treating seed with dichlobentiazox or isotianil, the disease occurrence was suppressed even under the condition where powdery mildew was artificially inoculated.

### (Test Example 3) Control Test of Wheat Powdery Mildew

Seed having a mass of 1 kg of wheat (variety: Norin No. 61) was mixed into 100 ml of suspension water containing 5 g or 0.5 g of dichlobentiazox or isotianil and air-dried, and then, 12 seeds were sown in a plastic cup having a diameter of 6 cm containing river sand and managed in a greenhouse. The number of emerged seeds was investigated nine days after seeding, and an emergence rate was calculated (Examples 6 to 9). In Comparative Examples 6 to 9, 20 ml of suspension water of an active ingredient, which had been adjusted to have a concentration shown in Table 4, was sprayed in a frame of 45 cm × 45 cm in which a pot of wheat seedlings was placed (corresponding to 1000 L/ha) 14 days after seeding. On day 14 after seeding, conidiospores of powdery mildew were sifted over leaves of wheat seedlings and inoculated onto the leaves (after the sprayed liquid was dried in the case of Comparative Examples), a lesion area ratio of powdery mildew in a first leaf was investigated 19 days after seeding according to the criteria in Table 1, and the degree of disease occurrence was calculated by the above calculation formula (1). The result of the emergence rate and the degree of disease occurrence of powdery mildew is shown in Table 4.

**[Table 4]**

| | Active Ingredient | Treatment Method | Amount of Chemical Treated of Active Ingredient | Emergence Rate (%) | Degree of Disease Occurrence |
|---|---|---|---|---|---|
| Example 6 | Dichlobentiazox | Seed Treatment | 5 g/Seed 1 kg (Corresponding to 500 g/ha) | 100 | 9.0 |
| Example 7 | Dichlobentiazox | Seed Treatment | 0.5 g/Seed 1 kg (Corresponding to 50 g/ha) | 97 | 10.1 |
| Example 8 | Isotianil | Seed Treatment | 5 g/Seed 1 kg (Corresponding to 500 g/ha) | 83.3 | 4.4 |
| Example 9 | Isotianil | Seed Treatment | 0.5 g/Seed 1 kg (Corresponding to 50 g/ha) | 100 | 23.5 |
| Comparative Example 6 | Dichlobentiazox | Foliage Treatment | Spray 500 ppm Suspension Water (Corresponding to 500 g/ha) | 97 | 44.4 |
| Comparative Example 7 | Dichlobentiazox | Foliage Treatment | Spray 50 ppm Suspension Water (Corresponding to 50 g/ha) | 100 | 52.8 |
| Comparative Example 8 | Isotianil | Foliage Treatment | Spray 500 ppm Suspension Water (Corresponding to 500 g/ha) | 100 | 27.8 |
| Comparative Example 9 | Isotianil | Foliage Treatment | Spray 50 ppm Suspension Water (Corresponding to 50 g/ha) | 97 | 47.2 |
| Comparative Example 10 | None | - | - | 97 | 54.2 |

In the case of treating seed with dichlobentiazox or isotianil, the disease occurrence of powdery mildew was suppressed lower than the case of spraying dichlobentiazox or isotianil on foliage during a growing period.

### (Test Example 4) Control Test of Wheat Powdery Mildew

Seed having a mass of 1 kg of wheat (variety: Norin No. 61) was mixed into 100 ml of suspension water containing 0.5 g of the above compound (6) or compound (3) (synthesis was performed in accordance with a known method, formulated 10% wettable powder was used) and air-dried, and then, 12 seeds were sown in a plastic cup having a diameter of 6 cm containing river sand and managed in a greenhouse. The number of emerged seeds was investigated nine days after seeding, and an emergence rate was calculated (Examples 10 and 11). In Comparative Example 11 and Comparative Example 12, 20 ml of suspension water of an active ingredient, which had been adjusted to have a concentration shown in Table 5, was sprayed in a frame of 45 cm × 45 cm in which a pot of wheat seedlings was placed (corresponding to 1000 L/ha) 15 days after seeding. On day 15 after seeding, conidiospores of powdery mildew were sifted over leaves of wheat seedlings and inoculated onto the leaves (after the sprayed liquid was dried in the case of Comparative Examples), a lesion area ratio of powdery mildew in a first leaf was investigated 22 days after seeding according to the criteria in Table 1, and the degree of disease occurrence was calculated by the above calculation formula (1). The result of the emergence rate and the degree of disease occurrence of powdery mildew is shown in Table 5.

**[Table 5]**

| | Active Ingredient | Treatment Method | Amount of Chemical Treated of Active Ingredient | Emergence Rate (%) | Degree of Disease Occurrence |
|---|---|---|---|---|---|
| Example 10 | Compound (6) | Seed Treatment | 0.5 g/Seed 1 kg (Corresponding to 50 g/ha) | 97.2 | 16.3 |
| Example 11 | Compound (3) | Seed Treatment | 0.5 g/Seed 1 kg (Corresponding to 50 g/ha) | 97.2 | 17.0 |
| Comparative Example 11 | Compound (6) | Foliage Spray | Spray 50 ppm Suspension Water (Corresponding to 50 g/ha) | 100 | 22.2 |
| Comparative Example 12 | Compound (3) | Foliage Spray | Spray 50 ppm Suspension Water (Corresponding to 50 g/ha) | 97.2 | 62.1 |
| Comparative Example 13 | None | - | - | 100 | 51.4 |

In the case of treating seed with the 3,4-dichloroisothiazole derivative of the compound (6) or (3), the disease occurrence of powdery mildew was suppressed lower than the case of spraying the 3,4-dichloroisothiazole derivative of the compound (6) or (3) on foliage during a growing period.

### (Test Example 5) Control Test of Wheat Powdery Mildew

Seed of wheat (variety: Haruyutaka) sterilized in advance with commercial Benlate T wettable powder 20 ("Benlate" is a registered trademark) was used. In Examples 12, 13, and 14, seed having a mass of 1 kg was mixed into 50 ml of suspension water containing 2.5 g or 1.25 g of dichlobentiazox or 50 ml of suspension water containing 2.5 g of isotianil, air-dried, and then, stripe-sown in a field with a furrow width of 30 cm and a ratio of 100 kg/ha (300 seeds/m²). Moreover, in Comparative Example 14, seed having a mass of 1 kg was mixed into 50 ml of suspension water containing 2.5 g of tiadinil (commercial V-GET flowable was used, "V-GET" is a registered trademark), air-dried, and then, stripe-sown in a field with a furrow width of 30 cm and a ratio of 100 kg/ha (300 seeds/m²). The presence or absence of disease occurrence and a lesion area ratio of powdery mildew in leaves just below flag leaves (next leaves) of 30 stems were investigated 85 days after seeding by according to the criteria in Table 1, and a disease leaf rate and the degree of disease occurrence were calculated by the above calculation formula (1). The result is shown in Table 6.

**[Table 6]**

| | Active Ingredient | Treatment Method | Amount of Chemical Treated of Active Ingredient | Disease Leaf Rate (%) | Degree of Disease Occurrence |
|---|---|---|---|---|---|
| Example 12 | Dichlobentiazox | Seed Treatment | 2.5 g/Seed 1 kg (Corresponding to 250 g/ha) | 2.2 | 0.4 |
| Example 13 | Dichlobentiazox | Seed Treatment | 1.25 g/Seed 1 kg (Corresponding to 125 g/ha) | 4.4 | 0.8 |
| Example 14 | Isotianil | Seed Treatment | 2.5 g/Seed 1 kg (Corresponding to 250 g/ha) | 4.4 | 1.0 |
| Comparative Example 14 | Tiadinil | Seed Treatment | 2.5 g/Seed 1 kg (Corresponding to 250 g/ha) | 33.3 | 11.0 |
| Comparative Example 15 | None | - | - | 42.2 | 19.2 |

The method in which the seed is treated with dichlobentiazox or isotianil suppresses the disease occurrence of powdery mildew lower than the method in which the seed is treated with tiadinil.

### (Test Example 6) Evaluation Test of Shortening of Wheat

Seed of wheat (variety: Haruyutaka) sterilized in advance with commercial Benlate T wettable powder 20 ("Benlate" is a registered trademark) was used. In Example 15, seed having a mass of 1 kg was mixed into 100 ml of suspension water containing 5 g of dichlobentiazox, air-dried, and then, stripe-sown in a field with a furrow width of 30 cm and a ratio of 163 kg/ha (417 seeds/m²), and a spray solution corresponding to that obtained by suspending 125 g of propiconazole in 200 liters of water per 1 ha was sprayed on foliage of wheat of the whole of a test field four times, during an ear emergence period (63 days after seeding), a flowering period (70 days after seeding), a flowering end period (77 days after seeding), and 84 days after seeding. In Comparative Example 16, cultivation management was performed in the same manner using the same seed as in Example 15 without performing seed treatment with dichlobentiazox. Wheat in 3 m² was harvested 106 days after seeding, a culm length was measured, shedding was performed after air drying for a few days, and a seed yield was measured. The result is shown in Table 7.

**[Table 7]**

| | Active Ingredient | Treatment Method | Amount of Chemical Treated of Active Ingredient | Culm Length (cm) | Seed Yield (g) |
|---|---|---|---|---|---|
| Example 15 | Dichlobentiazox | Seed Treatment | 5 g/Seed 1 kg | 80.1 | 1015 |
| | Propiconazole | Foliage Treatment | Spray 125 g/ha Four Times | | |
| Comparative Example 16 | Propiconazole | Foliage Treatment | Spray 125 g/ha Three Times | 82.5 | 990 |

In wheat cultivated by treating seed with dichlobentiazox, the culm length in harvesting time was slightly shorter, and the yield amount of wheat grains was slightly higher.

### (Test Example 7) Control Test of Septoria Leaf Blotch of Wheat

Seed of wheat (variety: TRAPEZ) was used. On seed having a mass of 1 kg, 20 ml of suspension water containing 0.5 g or 5 g of dichlobentiazox or isotianil was sprayed. In Examples 16, 17, and 18, the seed treated with the chemical was stripe-sown with a ratio of 100 kg/ha. In contrast, in Comparative Example 17, seed which had not treated with dichlobentiazox or isotianil was sown in a field in the same manner, and a spray solution corresponding to that obtained by suspending 750 g of chlorothalonil (commercial FUNGISTOP was used, "FUNGISTOP" is a registered trademark) in 200 liters of water per 1 ha was sprayed on foliage of wheat 154 days and 184 days after seeding. The severity of disease occurrence of septoria leaf blotch in flag leaves of 25 stems was investigated 219 days after seeding according to the criteria in Table 1, and the degree of disease occurrence was calculated by the above calculation formula (1). The result is shown in Table 8.

**[Table 8]**

| | Active Ingredient | Treatment Method | Amount of Chemical Treated of Active Ingredient | Degree of Disease Occurrence |
|---|---|---|---|---|
| Example 16 | Dichlobentiazox | Seed Treatment | 0.5 g/Seed 1 kg (Corresponding to 50 g/ha) | 2.8 |
| Example 17 | Dichlobentiazox | Seed Treatment | 5 g/Seed 1 kg (Corresponding to 500 g/ha) | 1.9 |
| Example 18 | Isotianil | Seed Treatment | 0.5 g/Seed 1 kg (Corresponding to 50 g/ha) | 2.1 |
| Comparative Example 17 | Chlorothalonil | Foliage Treatment | Spray 750 g/ha Two Times | 3.1 |
| Comparative Example 18 | None | - | - | 10.0 |

In wheat cultivated by treating seed with dichlobentiazox or isotianil, the disease occurrence of septoria leaf blotch was more suppressed than wheat subjected to the foliage treatment by spraying of chlorothalonil practically used for controlling septoria leaf blotch.

### (Test Example 8) Control Test of Septoria Leaf Blotch of Wheat

Seed having a mass of 1 kg of wheat (variety: Apache) was mixed into 100 ml of suspension water containing from 0.5 g or 5 g of the 3,4-dichloroisothiazole derivative of the compound (6) or (3) (synthesis was performed in accordance with a known method, formulated 10% wettable powder was used) and air-dried, and then, 12 seeds were sown in a plastic cup having a diameter of 6 cm containing river sand and managed in a greenhouse. The number of emerged seeds was investigated 12 days after seeding, and an emergence rate was calculated. In Comparative Examples 19 to 22, 20 ml of suspension water of an active ingredient, which had been adjusted to have a concentration shown in Table 9, was sprayed in a frame of 45 cm × 45 cm in which a pot of wheat seedlings was placed (corresponding to 1000 L/ha) 12 days after seeding. A spore suspension in which conidiospores of septoria leaf blotch are suspended were sprayed and inoculated on leaves of wheat seedlings 12 days after seeding (after the sprayed liquid was dried in the case of Comparative Examples), a lesion area ratio of septoria leaf blotch in a second leaf was investigated 31 days after seeding according to the criteria in Table 1, and the degree of disease occurrence was calculated by the above calculation formula (1). The result of the emergence rate and the degree of disease occurrence of septoria leaf blotch is shown in Table 9.

**[Table 9]**

| | Active Ingredient | Treatment Method | Amount of Chemical Treated of Active Ingredient | Emergence Rate (%) | Degree of Disease Occurrence |
|---|---|---|---|---|---|
| Example 19 | Compound (6) | Seed Treatment | 5 g/Seed 1 kg (Corresponding to 500 g/ha) | 88.9 | 4.2 |
| Example 20 | Compound (6) | Seed Treatment | 0.5 g/Seed 1 kg (Corresponding to 50 g/ha) | 88.9 | 16.1 |
| Example 21 | Compound (3) | Seed Treatment | 5 g/Seed 1 kg (Corresponding to 500 g/ha) | 86.1 | 8.2 |
| Example 22 | Compound (3) | Seed Treatment | 0.5 g/Seed 1 kg (Corresponding to 50 g/ha) | 97.2 | 22.2 |
| Comparative Example 19 | Compound (6) | Foliage Treatment | Spray 500 ppm Suspension Water (Corresponding to 500 g/ha) | 94.4 | 48.5 |
| Comparative Example 20 | Compound (6) | Foliage Treatment | Spray 50 ppm Suspension Water (Corresponding to 50 g/ha) | 97.2 | 29.5 |
| Comparative Example 21 | Compound (3) | Foliage Treatment | Spray 500 ppm Suspension Water (Corresponding to 500 g/ha) | 97.2 | 37.5 |
| Comparative Example 22 | Compound (3) | Foliage Treatment | Spray 50 ppm Suspension Water (Corresponding to 50 g/ha) | 97.2 | 29.3 |
| Comparative Example 23 | None | - | - | 97.2 | 28.5 |

In the case of treating seed with the 3,4-dichloroisothiazole derivative of the compound (6) or the compound (3), the disease occurrence of septoria leaf blotch was suppressed lower than the case of spraying the 3,4-dichloroisothiazole derivative of the compound (6) or the compound (3) on foliage during a growing period.

### (Test Example 9) Control Test of Wheat Powdery Mildew

Seed of wheat (variety: Norin No. 61) was used, and 100 ml of suspension waters each containing the compound shown in Table 10 at an amount shown in Table 15 (synthesis was performed in accordance with a known method, a solution dissolved in DMSO or formulated 10% wettable powder was used) were prepared. The seed having a mass of 1 kg of wheat was mixed into the suspension water with a chemical treated amount shown in Table 10, and air-dried, and then, 5 seeds were sown in a plastic cup having a diameter of 6 cm containing river sand and managed in a greenhouse. In Comparative Examples, 20 ml of the suspension water of an active ingredient, which had been adjusted to have a concentration shown in Table 10, was sprayed in a frame of 45 cm × 45 cm in which a pot of wheat seedlings was placed (corresponding to 1000 L/ha) 14 days after seeding. On day 14 after seeding, conidiospores of powdery mildew were sifted over leaves of wheat seedlings and inoculated onto the leaves (after the sprayed liquid was dried in the case of Comparative Examples), a lesion area ratio of powdery mildew in a first leaf was investigated 21 days after seeding according to the criteria in Table 1, and the degree of disease occurrence was calculated by the above calculation formula (1). Further, on a different day, similar tests were also carried out for Examples and Comparative Examples shown in Tables 11 to 14, respectively. The result of the degree of disease occurrence of powdery mildew is shown in Tables 10 to 14.

**[Table 10]**

| | Active Ingredient | Treatment Method | Amount of Chemical Treated of Active Ingredient | Disease Leaf Rate (%) | Degree of Disease Occurrence |
|---|---|---|---|---|---|
| Example 23 | Compound (2) | Seed Treatment | 0.1 g/Seed 1 kg (Corresponding to 10 g/ha) | 100.0 | 45.9 |
| Example 24 | Compound (2) | Seed Treatment | 0.5 g/Seed 1 kg (Corresponding to 50 g/ha) | 93.8 | 41.0 |
| Example 25 | Compound (2) | Seed Treatment | 1 g/Seed 1 kg (Corresponding to 100 g/ha) | 87.5 | 28.9 |
| Example 26 | Compound (3) | Seed Treatment | 0.05 g/Seed 1 kg (Corresponding to 5 g/ha) | 100.0 | 45.2 |
| Example 27 | Compound (3) | Seed Treatment | 0.5 g/Seed 1 kg (Corresponding to 50 g/ha) | 59.4 | 14.8 |
| Example 28 | Compound (6) | Seed Treatment | 0.05 g/Seed 1 kg (Corresponding to 5 g/ha) | 93.8 | 48.5 |
| Example 29 | Compound (6) | Seed Treatment | 0.5 g/Seed 1 kg (Corresponding to 50 g/ha) | 87.1 | 28.1 |
| Example 30 | Compound (9) | Seed Treatment | 0.05 g/Seed 1 kg (Corresponding to 5 g/ha) | 96.9 | 38.3 |
| Example 31 | Compound (9) | Seed Treatment | 0.1 g/Seed 1 kg (Corresponding to 10 g/ha) | 83.9 | 33.0 |
| Comparative Example 24 | Compound (2) | Foliage Treatment | Spray 10 ppm Suspension Water (Corresponding to 10 g/ha) | 100.0 | 59.4 |
| Comparative Example 25 | Compound (2) | Foliage Treatment | Spray 50 ppm Suspension Water (Corresponding to 50 g/ha) | 100.0 | 56.3 |
| Comparative Example 26 | Compound (2) | Foliage Treatment | Spray 100 ppm Suspension Water (Corresponding to 100 g/ha) | 95.8 | 47.9 |
| Comparative Example 27 | Compound (3) | Foliage Treatment | Spray 5 ppm Suspension Water (Corresponding to 5 g/ha) | 100.0 | 63.5 |
| Comparative Example 28 | Compound (3) | Foliage Treatment | Spray 50 ppm Suspension Water (Corresponding to 50 g/ha) | 100.0 | 56.3 |
| Comparative Example 29 | Compound (6) | Foliage Treatment | Spray 5 ppm Suspension Water (Corresponding to 5 g/ha) | 100.0 | 56.3 |
| Comparative Example 30 | Compound (6) | Foliage Treatment | Spray 50 ppm Suspension Water (Corresponding to 50 g/ha) | 87.5 | 40.6 |
| Comparative Example 31 | Compound (9) | Foliage Treatment | Spray 5 ppm Suspension Water (Corresponding to 5 g/ha) | 100.0 | 57.3 |
| Comparative Example 32 | Compound (9) | Foliage Treatment | Spray 10 ppm Suspension Water (Corresponding to 10 g/ha) | 100.0 | 63.5 |
| Comparative Example 33 | None | - | - | 100.0 | 74.0 |

**[Table 11]**

| | Active Ingredient | Treatment Method | Amount of Chemical Treated of Active Ingredient | Disease Leaf Rate (%) | Degree of Disease Occurrence |
|---|---|---|---|---|---|
| Example 32 | Compound (1) | Seed Treatment | 0.05 g/Seed 1 kg (Corresponding to 5 g/ha) | 93.8 | 56.4 |
| Example 33 | Compound (1) | Seed Treatment | 0.5 g/Seed 1 kg (Corresponding to 50 g/ha) | 71.9 | 22.7 |
| Example 34 | Compound (4) | Seed Treatment | 0.1 g/Seed 1 kg (Corresponding to 10 g/ha) | 100 | 74.1 |
| Example 35 | Compound (4) | Seed Treatment | 0.5 g/Seed 1 kg (Corresponding to 50 g/ha) | 100 | 57.2 |
| Example 36 | Compound (5) | Seed Treatment | 0.5 g/Seed 1 kg (Corresponding to 50 g/ha) | 95 | 57.0 |
| Example 37 | Compound (7) | Seed Treatment | 0.5 g/Seed 1 kg (Corresponding to 50 g/ha) | 100 | 78.8 |
| Example 38 | Compound (8) | Seed Treatment | 0.1 g/Seed 1 kg (Corresponding to 10 g/ha) | 100 | 80.2 |
| Example 39 | Compound (8) | Seed Treatment | 0.5 g/Seed 1 kg (Corresponding to 50 g/ha) | 96.4 | 75.1 |
| Example 40 | Compound (11) | Seed Treatment | 0.5 g/Seed 1 kg (Corresponding to 50 g/ha) | 100 | 79.7 |
| Comparative Example 34 | Compound (1) | Foliage Treatment | Spray 5 ppm Suspension Water (Corresponding to 5 g/ha) | 100 | 95.3 |
| Comparative Example 35 | Compound (1) | Foliage Treatment | Spray 50 ppm Suspension Water (Corresponding to 50 g/ha) | 100 | 89.1 |
| Comparative Example 36 | Compound (4) | Foliage Treatment | Spray 10 ppm Suspension Water (Corresponding to 10 g/ha) | 100 | 100.0 |
| Comparative Example 37 | Compound (4) | Foliage Treatment | Spray 50 ppm Suspension Water (Corresponding to 50 g/ha) | 100 | 90.6 |
| Comparative Example 38 | Compound (5) | Foliage Treatment | Spray 50 ppm Suspension Water (Corresponding to 50 g/ha) | 100 | 90.5 |
| Comparative Example 39 | Compound (7) | Foliage Treatment | Spray 50 ppm Suspension Water (Corresponding to 50 g/ha) | 100 | 94.8 |
| Comparative Example 40 | Compound (8) | Foliage Treatment | Spray 10 ppm Suspension Water (Corresponding to 10 g/ha) | 100 | 96.9 |
| Comparative Example 41 | Compound (8) | Foliage Treatment | Spray 50 ppm Suspension Water (Corresponding to 50 g/ha) | 100 | 94.8 |
| Comparative Example 42 | Compound (11) | Foliage Treatment | Spray 50 ppm Suspension Water (Corresponding to 50 g/ha) | 100 | 97.9 |
| Comparative Example 43 | None | - | - | 100.0 | 100.0 |

**[Table 12]**

| | Active Ingredient | Treatment Method | Amount of Chemical Treated of Active Ingredient | Disease Leaf Rate (%) | Degree of Disease Occurrence |
|---|---|---|---|---|---|
| Example 41 | Compound (1) | Seed Treatment | 0.5 g/Seed 1 kg (Corresponding to 50 g/ha) | 0.0 | 0.0 |
| Example 42 | Compound (13) | Seed Treatment | 0.05 g/Seed 1 kg (Corresponding to 5 g/ha) | 53.3 | 19.4 |
| Example 43 | Compound (13) | Seed Treatment | 0.1 g/Seed 1 kg (Corresponding to 10 g/ha) | 20.0 | 7.5 |
| Example 44 | Compound (13) | Seed Treatment | 0.5 g/Seed 1 kg (Corresponding to 50 g/ha) | 38.9 | 9.7 |
| Example 45 | Compound (15) | Seed Treatment | 0.05 g/Seed 1 kg (Corresponding to 5 g/ha) | 70.0 | 40.8 |
| Example 46 | Compound (15) | Seed Treatment | 0.1 g/Seed 1 kg (Corresponding to 10 g/ha) | 60.0 | 31.3 |
| Example 47 | Compound (15) | Seed Treatment | 0.5 g/Seed 1 kg (Corresponding to 50 g/ha) | 34.4 | 11.9 |
| Example 48 | Compound (16) | Seed Treatment | 0.1 g/Seed 1 kg (Corresponding to 10 g/ha) | 65.0 | 22.5 |
| Example 49 | Compound (16) | Seed Treatment | 0.5 g/Seed 1 kg (Corresponding to 50 g/ha) | 16.7 | 6.3 |
| Example 50 | Compound (17) | Seed Treatment | 0.05 g/Seed 1 kg (Corresponding to 5 g/ha) | 66.7 | 23.3 |
| Example 51 | Compound (17) | Seed Treatment | 0.1 g/Seed 1 kg (Corresponding to 10 g/ha) | 25.0 | 10.4 |
| Comparative Example 44 | Compound (1) | Foliage Treatment | Spray 50 ppm Suspension Water (Corresponding to 50 g/ha) | 46.7 | 21.7 |
| Comparative Example 45 | Compound (13) | Foliage Treatment | Spray 5 ppm Suspension Water (Corresponding to 5 g/ha) | 100.0 | 60.0 |
| Comparative Example 46 | Compound (13) | Foliage Treatment | Spray 10 ppm Suspension Water (Corresponding to 10 g/ha) | 53.3 | 36.7 |
| Comparative Example 47 | Compound (13) | Foliage Treatment | Spray 50 ppm Suspension Water (Corresponding to 50 g/ha) | 53.3 | 21.7 |
| Comparative Example 48 | Compound (15) | Foliage Treatment | Spray 5 ppm Suspension Water (Corresponding to 5 g/ha) | 100.0 | 66.7 |
| Comparative Example 49 | Compound (15) | Foliage Treatment | Spray 10 ppm Suspension Water (Corresponding to 10 g/ha) | 93.3 | 80.0 |
| Comparative Example 50 | Compound (15) | Foliage Treatment | Spray 50 ppm Suspension Water (Corresponding to 50 g/ha) | 60.0 | 38.3 |
| Comparative Example 51 | Compound (16) | Foliage Treatment | Spray 10 ppm Suspension Water (Corresponding to 10 g/ha) | 100.0 | 63.3 |
| Comparative Example 52 | Compound (16) | Foliage Treatment | Spray 50 ppm Suspension Water (Corresponding to 50 g/ha) | 80.0 | 43.3 |
| Comparative Example 53 | Compound (17) | Foliage Treatment | Spray 5 ppm Suspension Water (Corresponding to 5 g/ha) | 93.3 | 45.0 |
| Comparative Example 54 | Compound (17) | Foliage Treatment | Spray 10 ppm Suspension Water (Corresponding to 10 g/ha) | 80.0 | 43.3 |
| Comparative Example 55 | None | - | - | 100.0 | 100.0 |

**[Table 13]**

| | Active Ingredient | Treatment Method | Amount of Chemical Treated of Active Ingredient | Disease Leaf Rate (%) | Degree of Disease Occurrence |
|---|---|---|---|---|---|
| Example 52 | Compound (4) | Seed Treatment | 0.1 g/Seed 1 kg (Corresponding to 10 g/ha) | 100.0 | 47.9 |
| Example 53 | Compound (4) | Seed Treatment | 0.5 g/Seed 1 kg (Corresponding to 50 g/ha) | 100.0 | 49.1 |
| Example 54 | Compound (5) | Seed Treatment | 0.05 g/Seed 1 kg (Corresponding to 5 g/ha) | 100.0 | 66.1 |
| Example 55 | Compound (5) | Seed Treatment | 0.1 g/Seed 1 kg (Corresponding to 10 g/ha) | 100.0 | 58.1 |
| Example 56 | Compound (5) | Seed Treatment | 0.5 g/Seed 1 kg (Corresponding to 50 g/ha) | 95.0 | 40.6 |
| Example 57 | Compound (7) | Seed Treatment | 0.5 g/Seed 1 kg (Corresponding to 50 g/ha) | 100.0 | 61.3 |
| Example 58 | Compound (8) | Seed Treatment | 0.1 g/Seed 1 kg (Corresponding to 10 g/ha) | 95.8 | 49.7 |
| Example 59 | Compound (11) | Seed Treatment | 0.1 g/Seed 1 kg (Corresponding to 10 g/ha) | 95.0 | 50.1 |
| Example 60 | Compound (11) | Seed Treatment | 0.5 g/Seed 1 kg (Corresponding to 50 g/ha) | 100.0 | 40.8 |
| Example 61 | Compound (17) | Seed Treatment | 0.05 g/Seed 1 kg (Corresponding to 5 g/ha) | 100.0 | 66.7 |
| Example 62 | Compound (17) | Seed Treatment | 0.1 g/Seed 1 kg (Corresponding to 10 g/ha) | 100.0 | 47.9 |
| Example 63 | Compound (17) | Seed Treatment | 0.5 g/Seed 1 kg (Corresponding to 50 g/ha) | 83.8 | 33.1 |
| Comparative Example 56 | Compound (4) | Foliage Treatment | Spray 10 ppm Suspension Water (Corresponding to 10 g/ha) | 100.0 | 81.7 |
| Comparative Example 57 | Compound (4) | Foliage Treatment | Spray 50 ppm Suspension Water (Corresponding to 50 g/ha) | 100.0 | 71.5 |
| Comparative Example 58 | Compound (5) | Foliage Treatment | Spray 5 ppm Suspension Water (Corresponding to 5 g/ha) | 100.0 | 100.0 |
| Comparative Example 59 | Compound (5) | Foliage Treatment | Spray 10 ppm Suspension Water (Corresponding to 10 g/ha) | 100.0 | 62.4 |
| Comparative Example 60 | Compound (5) | Foliage Treatment | Spray 50 ppm Suspension Water (Corresponding to 50 g/ha) | 100.0 | 86.7 |
| Comparative Example 61 | Compound (7) | Foliage Treatment | Spray 50 ppm Suspension Water (Corresponding to 50 g/ha) | 100.0 | 77.1 |
| Comparative Example 62 | Compound (8) | Foliage Treatment | Spray 10 ppm Suspension Water (Corresponding to 10 g/ha) | 100.0 | 72.8 |
| Comparative Example 63 | Compound (11) | Foliage Treatment | Spray 10 ppm Suspension Water (Corresponding to 10 g/ha) | 98.4 | 72.6 |
| Comparative Example 64 | Compound (11) | Foliage Treatment | Spray 50 ppm Suspension Water (Corresponding to 50 g/ha) | 99.6 | 67.6 |
| Comparative Example 65 | Compound (17) | Foliage Treatment | Spray 5 ppm Suspension Water (Corresponding to 5 g/ha) | 100.0 | 85.8 |
| Comparative Example 66 | Compound (17) | Foliage Treatment | Spray 10 ppm Suspension Water (Corresponding to 10 g/ha) | 95.8 | 62.4 |
| Comparative Example 67 | Compound (17) | Foliage Treatment | Spray 50 ppm Suspension Water (Corresponding to 50 g/ha) | 90.6 | 42.4 |
| Comparative Example 68 | None | - | - | 97.5 | 100.0 |

**[Table 14]**

| | Active Ingredient | Treatment Method | Amount of Chemical Treated of Active Ingredient | Disease Leaf Rate (%) | Degree of Disease Occurrence |
|---|---|---|---|---|---|
| Example 64 | Compound (12) | Seed Treatment | 0.1 g/Seed 1 kg (Corresponding to 10 g/ha) | 75.8 | 21.3 |
| Example 65 | Compound (12) | Seed Treatment | 1 g/Seed 1 kg (Corresponding to 100 g/ha) | 87.5 | 34.1 |
| Example 66 | Compound (13) | Seed Treatment | 0.1 g/Seed 1 kg (Corresponding to 10 g/ha) | 68.8 | 17.2 |
| Example 67 | Compound (13) | Seed Treatment | 0.5 g/Seed 1 kg (Corresponding to 50 g/ha) | 44.4 | 13.9 |
| Example 68 | Compound (14) | Seed Treatment | 0.5 g/Seed 1 kg (Corresponding to 50 g/ha) | 25.0 | 7.8 |
| Example 69 | Compound (14) | Seed Treatment | 1 g/Seed 1 kg (Corresponding to 100 g/ha) | 40.0 | 11.3 |
| Example 70 | Compound (15) | Seed Treatment | 0.5 g/Seed 1 kg (Corresponding to 50 g/ha) | 37.5 | 13.1 |
| Example 71 | Compound (16) | Seed Treatment | 0.1 g/Seed 1 kg (Corresponding to 10 g/ha) | 60.8 | 15.2 |
| Example 72 | Compound (16) | Seed Treatment | 0.5 g/Seed 1 kg (Corresponding to 50 g/ha) | 35.4 | 8.9 |
| Example 73 | Compound (16) | Seed Treatment | 1 g/Seed 1 kg (Corresponding to 100 g/ha) | 50.0 | 18.2 |
| Comparative Example 69 | Compound (12) | Foliage Treatment | Spray 10 ppm Suspension Water (Corresponding to 10 g/ha) | 94.4 | 56.9 |
| Comparative Example 70 | Compound (12) | Foliage Treatment | Spray 100 ppm Suspension Water (Corresponding to 100 g/ha) | 93.3 | 47.9 |
| Comparative Example 71 | Compound (13) | Foliage Treatment | Spray 10 ppm Suspension Water (Corresponding to 10 g/ha) | 76.7 | 35.6 |
| Comparative Example 72 | Compound (13) | Foliage Treatment | Spray 50 ppm Suspension Water (Corresponding to 50 g/ha) | 83.3 | 31.3 |
| Comparative Example 73 | Compound (14) | Foliage Treatment | Spray 50 ppm Suspension Water (Corresponding to 50 g/ha) | 61.1 | 18.3 |
| Comparative Example 74 | Compound (14) | Foliage Treatment | Spray 100 ppm Suspension Water (Corresponding to 100 g/ha) | 44.4 | 14.4 |
| Comparative Example 75 | Compound (15) | Foliage Treatment | Spray 50 ppm Suspension Water (Corresponding to 50 g/ha) | 100.0 | 47.9 |
| Comparative Example 76 | Compound (16) | Foliage Treatment | Spray 10 ppm Suspension Water (Corresponding to 10 g/ha) | 80.6 | 32.6 |
| Comparative Example 77 | Compound (16) | Foliage Treatment | Spray 50 ppm Suspension Water (Corresponding to 50 g/ha) | 53.3 | 19.6 |
| Comparative Example 78 | Compound (16) | Foliage Treatment | Spray 100 ppm Suspension Water (Corresponding to 100 g/ha) | 80.6 | 29.2 |
| Comparative Example 79 | None | - | - | 100.0 | 70.0 |

In the case of cultivating wheat by treating seed with the compound shown in Tables 10 to 14, the disease occurrence of wheat powdery mildew was suppressed lower than the case of spraying the same amount of the compound on foliage.

### (Test Example 10) Control Test of Septoria Leaf Blotch of Wheat

Seed of wheat (variety: ARKEOS) was used, and 100 ml of suspension waters each containing the compound shown in Table 15 at an amount shown in Table 15 (synthesis was performed in accordance with a known method, a liquid dissolved in a small amount of DMSO or formulated 10% wettable powder was used) were prepared. Seed having a mass of 1 kg was mixed into the suspension water with a rate shown in Examples of Table 15, and air-dried, and then, 5 seeds were sown in a plastic cup having a diameter of 6 cm containing mixed soil of river sand and horticultural soil and managed in a greenhouse. The similar treatments were performed also for Examples shown in Tables 16 to 19, respectively. In Comparative Examples, 20 ml of suspension water of an active ingredient, which had been adjusted to have a concentration shown in Table 15 to 19, was sprayed in a frame of 45 cm × 45 cm in which a pot of wheat seedlings was placed (corresponding to 1000 L/ha) 14 days after seeding. On day 14 after seeding, a spore suspension in which conidiospores of septoria leaf blotch are suspended was sprayed and inoculated on leaves of wheat seedlings (after the sprayed liquid was dried in the case of Comparative Examples), a lesion area ratio of septoria leaf blotch in a second leaf was investigated approximately 35 days after seeding according to the criteria in Table 1, and the degree of disease occurrence was calculated by the above calculation formula (1). The result of the degree of disease occurrence of septoria leaf blotch is shown in Tables 15 to 19.

**[Table 15]**

| | Active Ingredient | Treatment Method | Amount of Chemical Treated of Active Ingredient | Disease Leaf Rate (%) | Degree of Disease Occurrence |
|---|---|---|---|---|---|
| Example 74 | Compound (3) | Seed Treatment | 0.5 g/Seed 1 kg (Corresponding to 50 g/ha) | 77.8 | 22.2 |
| Example 75 | Compound (3) | Seed Treatment | 5 g/Seed 1 kg (Corresponding to 500 g/ha) | 32.8 | 8.2 |
| Example 76 | Compound (6) | Seed Treatment | 0.5 g/Seed 1 kg (Corresponding to 50 g/ha) | 58.8 | 16.1 |
| Example 77 | Compound (6) | Seed Treatment | 5 g/Seed 1 kg (Corresponding to 500 g/ha) | 16.9 | 4.2 |
| Comparative Example 80 | Compound (3) | Foliage Treatment | Spray 50 ppm Suspension Water (Corresponding to 50 g/ha) | 97.0 | 29.3 |
| Comparative Example 81 | Compound (3) | Foliage Treatment | Spray 500 ppm Suspension Water (Corresponding to 500 g/ha) | 91.7 | 37.5 |
| Comparative Example 82 | Compound (6) | Foliage Treatment | Spray 50 ppm Suspension Water (Corresponding to 50 g/ha) | 88.9 | 29.5 |
| Comparative Example 83 | Compound (6) | Foliage Treatment | Spray 500 ppm Suspension Water (Corresponding to 500 g/ha) | 100.0 | 48.5 |
| Comparative Example 84 | None | - | - | 94.4 | 28.5 |

**[Table 16]**

| | Active Ingredient | Treatment Method | Amount of Chemical Treated of Active Ingredient | Disease Leaf Rate (%) | Degree of Disease Occurrence |
|---|---|---|---|---|---|
| Example 78 | Compound (1) | Seed Treatment | 5 g/Seed 1 kg (Corresponding to 500 g/ha) | 95.8 | 45.7 |
| Example 79 | Compound (2) | Seed Treatment | 1 g/Seed 1 kg (Corresponding to 100 g/ha) | 81.3 | 37.5 |
| Example 80 | Compound (3) | Seed Treatment | 0.1 g/Seed 1 kg (Corresponding to 10 g/ha) | 96.9 | 40.6 |
| Example 81 | Compound (3) | Seed Treatment | 5 g/Seed 1 kg (Corresponding to 500 g/ha) | 85.7 | 40.4 |
| Example 82 | Compound (6) | Seed Treatment | 0.1 g/Seed 1 kg (Corresponding to 10 g/ha) | 84.4 | 34.7 |
| Example 83 | Compound (6) | Seed Treatment | 5 g/Seed 1 kg (Corresponding to 500 g/ha) | 95.0 | 41.3 |
| Comparative Example 85 | Compound (1) | Foliage Treatment | Spray 500 ppm Suspension Water (Corresponding to 500 g/ha) | 100.0 | 71.9 |
| Comparative Example 86 | Compound (2) | Foliage Treatment | Spray 100 ppm Suspension Water (Corresponding to 100 g/ha) | 100.0 | 51.0 |
| Comparative Example 87 | Compound (3) | Foliage Treatment | Spray 10 ppm Suspension Water (Corresponding to 10 g/ha) | 100.0 | 62.5 |
| Comparative Example 88 | Compound (3) | Foliage Treatment | Spray 500 ppm Suspension Water (Corresponding to 500 g/ha) | 100.0 | 77.4 |
| Comparative Example 89 | Compound (6) | Foliage Treatment | Spray 10 ppm Suspension Water (Corresponding to 10 g/ha) | 100.0 | 53.3 |
| Comparative Example 90 | Compound (6) | Foliage Treatment | Spray 500 ppm Suspension Water (Corresponding to 500 g/ha) | 95.2 | 86.2 |
| Comparative Example 91 | None | - | - | 93.3 | 57.1 |

**[Table 17]**

| | Active Ingredient | Treatment Method | Amount of Chemical Treated of Active Ingredient | Disease Leaf Rate (%) | Degree of Disease Occurrence |
|---|---|---|---|---|---|
| Example 84 | Compound (7) | Seed Treatment | 0.1 g/Seed 1 kg (Corresponding to 10 g/ha) | 68.8 | 22.5 |
| Example 85 | Compound (7) | Seed Treatment | 1 g/Seed 1 kg (Corresponding to 100 g/ha) | 77.5 | 19.4 |
| Example 86 | Compound (8) | Seed Treatment | 0.05 g/Seed 1 kg (Corresponding to 5 g/ha) | 90.0 | 23.8 |
| Example 87 | Compound (8) | Seed Treatment | 0.5 g/Seed 1 kg (Corresponding to 50 g/ha) | 36.3 | 10.3 |
| Example 88 | Compound (8) | Seed Treatment | 1 g/Seed 1 kg (Corresponding to 100 g/ha) | 35.0 | 8.8 |
| Example 89 | Compound (11) | Seed Treatment | 0.1 g/Seed 1 kg (Corresponding to 10 g/ha) | 80.0 | 22.5 |
| Example 90 | Compound (11) | Seed Treatment | 0.5 g/Seed 1 kg (Corresponding to 50 g/ha) | 63.8 | 18.8 |
| Example 91 | Compound (11) | Seed Treatment | 1 g/Seed 1 kg (Corresponding to 100 g/ha) | 67.5 | 26.5 |
| Comparative Example 92 | Compound (7) | Foliage Treatment | Spray 10 ppm Suspension Water (Corresponding to 10 g/ha) | 100.0 | 41.7 |
| Comparative Example 93 | Compound (7) | Foliage Treatment | Spray 100 ppm Suspension Water (Corresponding to 100 g/ha) | 93.3 | 50.0 |
| Comparative Example 94 | Compound (8) | Foliage Treatment | Spray 5 ppm Suspension Water (Corresponding to 5 g/ha) | 100.0 | 38.3 |
| Comparative Example 95 | Compound (8) | Foliage Treatment | Spray 50 ppm Suspension Water (Corresponding to 50 g/ha) | 100.0 | 31.7 |
| Comparative Example 96 | Compound (8) | Foliage Treatment | Spray 100 ppm Suspension Water (Corresponding to 100 g/ha) | 93.3 | 26.7 |
| Comparative Example 97 | Compound (11) | Foliage Treatment | Spray 10 ppm Suspension Water (Corresponding to 10 g/ha) | 93.3 | 31.7 |
| Comparative Example 98 | Compound (11) | Foliage Treatment | Spray 50 ppm Suspension Water (Corresponding to 50 g/ha) | 100.0 | 35.0 |
| Comparative Example 99 | Compound (11) | Foliage Treatment | Spray 100 ppm Suspension Water (Corresponding to 100 g/ha) | 100.0 | 41.7 |
| Comparative Example 100 | None | - | - | 100.0 | 50.0 |

**[Table 18]**

| | Active Ingredient | Treatment Method | Amount of Chemical Treated of Active Ingredient | Disease Leaf Rate (%) | Degree of Disease Occurrence |
|---|---|---|---|---|---|
| Example 92 | Compound (13) | Seed Treatment | 0.05 g/Seed 1 kg (Corresponding to 5 g/ha) | 95.0 | 28.8 |
| Example 93 | Compound (13) | Seed Treatment | 0.1 g/Seed 1 kg (Corresponding to 10 g/ha) | 100.0 | 42.5 |
| Example 94 | Compound (14) | Seed Treatment | 0.5 g/Seed 1 kg (Corresponding to 50 g/ha) | 90.0 | 42.5 |
| Comparative Example 101 | Compound (13) | Foliage Treatment | Spray 5 ppm Suspension Water (Corresponding to 5 g/ha) | 100.0 | 60.0 |
| Comparative Example 102 | Compound (13) | Foliage Treatment | Spray 10 ppm Suspension Water (Corresponding to 10 g/ha) | 100.0 | 68.3 |
| Comparative Example 103 | Compound (14) | Foliage Treatment | Spray 50 ppm Suspension Water (Corresponding to 50 g/ha) | 100.0 | 48.3 |
| Comparative Example 104 | None | - | - | 100.0 | 56.7 |

**[Table 19]**

| | Active Ingredient | Treatment Method | Amount of Chemical Treated of Active Ingredient | Disease Leaf Rate (%) | Degree of Disease Occurrence |
|---|---|---|---|---|---|
| Example 95 | Compound (12) | Seed Treatment | 0.1 g/Seed 1 kg (Corresponding to 10 g/ha) | 75.0 | 26.3 |
| Example 96 | Compound (12) | Seed Treatment | 0.5 g/Seed 1 kg (Corresponding to 50 g/ha) | 41.3 | 10.3 |
| Example 97 | Compound (15) | Seed Treatment | 0.5 g/Seed 1 kg (Corresponding to 50 g/ha) | 41.3 | 10.3 |
| Example 98 | Compound (16) | Seed Treatment | 0.5 g/Seed 1 kg (Corresponding to 50 g/ha) | 82.5 | 29.4 |
| Example 99 | Compound (17) | Seed Treatment | 0.5 g/Seed 1 kg (Corresponding to 50 g/ha) | 82.5 | 29.4 |
| Example 100 | Compound (17) | Seed Treatment | 1 g/Seed 1 kg (Corresponding to 100 g/ha) | 78.8 | 20.9 |
| Comparative Example 105 | Compound (12) | Foliage Treatment | Spray 10 ppm Suspension Water (Corresponding to 10 g/ha) | 99.3 | 53.3 |
| Comparative Example 106 | Compound (12) | Foliage Treatment | Spray 50 ppm Suspension Water (Corresponding to 50 g/ha) | 93.6 | 39.2 |
| Comparative Example 107 | Compound (15) | Foliage Treatment | Spray 50 ppm Suspension Water (Corresponding to 50 g/ha) | 93.6 | 39.2 |
| Comparative Example 108 | Compound (16) | Foliage Treatment | Spray 50 ppm Suspension Water (Corresponding to 50 g/ha) | 99.7 | 38.3 |
| Comparative Example 109 | Compound (17) | Foliage Treatment | Spray 50 ppm Suspension Water (Corresponding to 50 g/ha) | 99.7 | 38.3 |
| Comparative Example 110 | Compound (17) | Foliage Treatment | Spray 100 ppm Suspension Water (Corresponding to 100 g/ha) | 94.9 | 36.7 |
| Comparative Example 111 | None | - | - | 98.0 | 45.0 |

In the case of cultivating wheat by treating seed with the compound shown in Tables 15 to 19, the disease occurrence of septoria leaf blotch of wheat was suppressed lower than the case of spraying the same amount of the compound on foliage.

The present invention is also exemplified by the following numbered clauses:
1. A method for controlling a small grain cereals disease comprising:
   treating seed of small grain cereals with one or two or more selected from a dichloroisothiazole compound or a salt thereof.
2. The method for controlling a small grain cereals disease according to clause 1, wherein the dichloroisothiazole compound or the salt thereof is a 3,4-dichloroisothiazole derivative or a salt thereof represented by the following Formula (1): 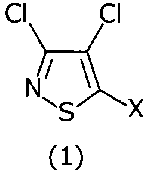
   in Formula (1), X is any one of groups represented by Formulas (2) to (8), 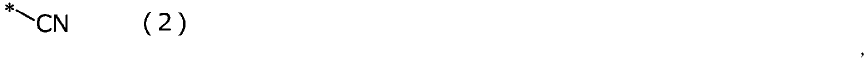 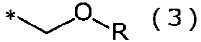
   in Formula (3), R is a hydrogen atom; a (C1-C6) alkylcarbonyl group which may be substituted; a (C3-C6) cycloalkylcarbonyl group which may be substituted; a (C2-C6) alkenylcarbonyl group which may be substituted; a (C2-C6) alkynylcarbonyl group which may be substituted; a nitrogen-containing condensed heterocyclic group which may be substituted; or a benzoyl group which may be substituted with a substituent α, 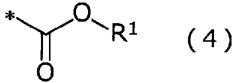
   in Formula (4), R¹ is a hydrogen atom; a (C1-C6) alkyl group which may be substituted; a (C3-C6) cycloalkyl group which may be substituted; a (C2-C6) alkenyl group which may be substituted; or a (C2-C6) alkynyl group which may be substituted, 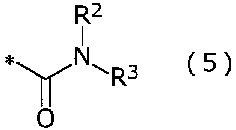
   in Formula (5), R² and R³ are each independently a hydrogen atom; a (C1-C6) alkyl group which may be substituted; a (C3-C6) cycloalkyl group which may be substituted; a (C2-C6) alkenyl group which may be substituted; a (C2-C6) alkynyl group which may be substituted; or a phenyl group which may be substituted with a substituent α; or R² and R³ may bond to form a 4-6 membered heterocycle, and the heterocycle may be substituted, 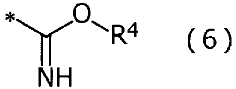
   in Formula (6), R⁴ is a (C1-C6) alkyl group which may be substituted; a (C3-C6) cycloalkyl group which may be substituted; a (C2-C6) alkenyl group which may be substituted; a (C2-C6) alkynyl group which may be substituted; or a benzyl group which may be substituted with a substituent α, 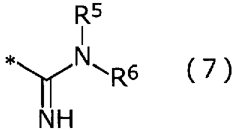
   in Formula (7), R⁵ and R⁶ are each independently a hydrogen atom; a (C1-C6) alkyl group which may be substituted; a (C3-C6) cycloalkyl group which may be substituted; a (C2-C6) alkenyl group which may be substituted; a (C2-C6) alkynyl group which may be substituted; or a phenyl group which may be substituted with a substituent α; or R⁵ and R⁶ may bond to form a 4-6 membered heterocycle, and the heterocycle may be substituted, 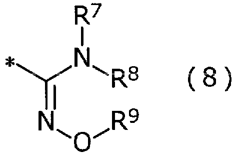
   in Formula (8), R⁷ and R⁸ are each independently a hydrogen atom; a (C1-C6) alkyl group which may be substituted; a (C3-C6) cycloalkyl group which may be substituted; a (C2-C6) alkenyl group which may be substituted; a (C2-C6) alkynyl group which may be substituted; or a phenyl group which may be substituted with a substituent α; or R⁷ and R⁸ may bond to form a 4-6 membered heterocycle, and the heterocycle may be substituted, and R⁹ is a hydrogen atom; a (C1-C6) alkyl group which may be substituted; a (C3-C6) cycloalkyl group which may be substituted; a (C2-C6) alkenyl group which may be substituted; or a (C2-C6) alkynyl group which may be substituted, and
   the substituent α is a (C1-C6) alkyl group, a (C3-C6) cycloalkyl group, a (C1-C6) haloalkyl group, a phenyl group, a halogen atom, a cyano group, a nitro group, a hydroxyl group, a (C1-C6) alkoxy group, a (C1-C5) acyl group, a carboxyl group, a (C1-C6) alkoxycarbonyl group, a mono(C1-C6 alkyl) carbamoyl group, a di(C1-C6 alkyl) carbamoyl group, an amino group, a mono(C1-C6 alkyl) amino group, or a di(C1-C6 alkyl) amino group.
3. The method for controlling a small grain cereals disease according to clause 2, wherein the 3,4-dichloroisothiazole derivative or the salt thereof is one or two or more selected from the following compounds or salts thereof: 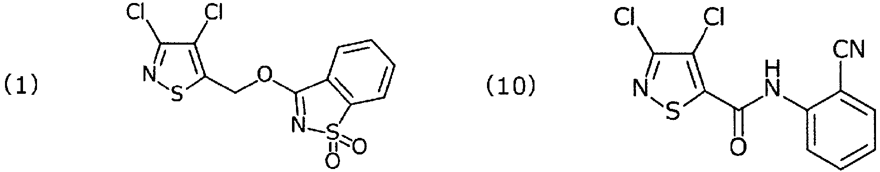 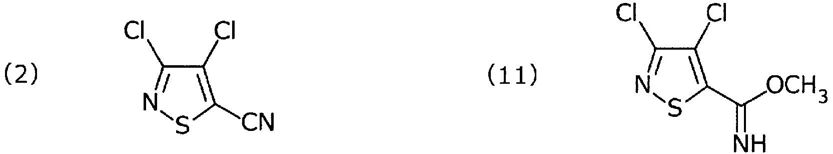 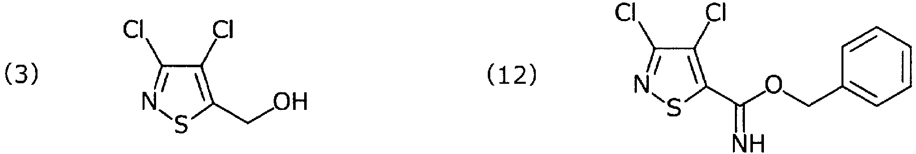 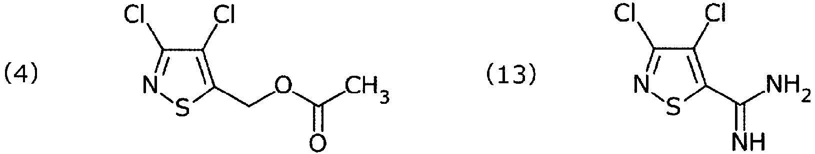 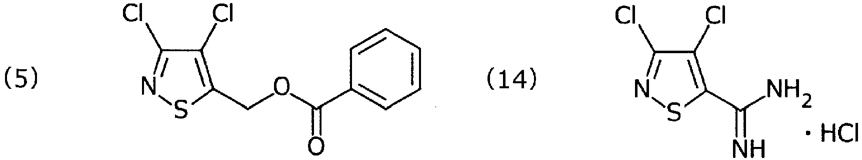 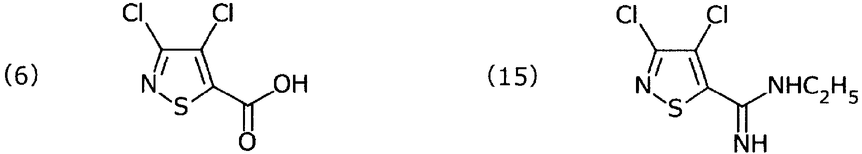 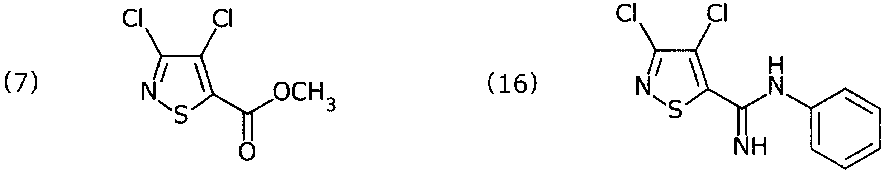 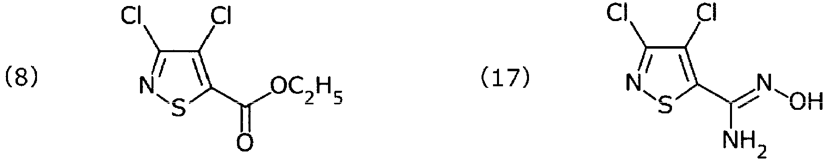 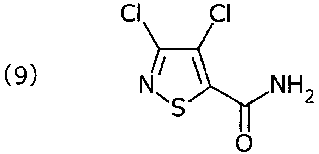
4. The method for controlling a small grain cereals disease according to any one of clauses 1 to 3, wherein the small grain cereals is at least one selected from wheat, barley, rye, and oat.
5. The method for controlling a small grain cereals disease according to clause 4, wherein the small grain cereals is wheat.
6. The method for controlling a small grain cereals disease according to any one of clauses 1 to 5, wherein the seed of small grain cereals is treated with one or two or more selected from the dichloroisothiazole compound or the salt thereof by a method of dust coating, smearing, spraying, or immersing.
7. The method for controlling a small grain cereals disease according to any one of clauses 1 to 6, wherein the treating is performed further in combination with one or two or more selected from a fungicide, an insecticide, a miticide, a nematicide, a herbicide, a plant growth regulator, and a safener.
8. A method for suppressing lodging damage of small grain cereals comprising:
   treating seed of small grain cereals with one or two or more selected from a dichloroisothiazole compound or a salt thereof.
9. Seed of small grain cereals treated with one or two or more selected from a dichloroisothiazole compound or a salt thereof.

## Claims

1. A method for controlling a small grain cereals disease comprising:
treating seed of small grain cereals with one or two or more selected from a dichloroisothiazole compound or a salt thereof,
wherein the small grain cereals is at least one selected from wheat, barley, rye, and oat and wherein the dichloroisothiazole compound or the salt thereof is a 3,4-dichloroisothiazole derivative or a salt thereof and is one or two or more selected from the following compound (1) or salts thereof:

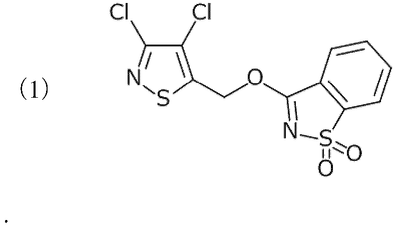

2. The method for controlling a small grain cereals disease according to claim 1, wherein the small grain cereals is wheat.

3. The method for controlling a small grain cereals disease according to claim 1 or 2, wherein the seed of small grain cereals is treated with one or two or more selected from the dichloroisothiazole compound or the salt thereof by a method of dust coating, smearing, spraying, or immersing.

4. The method for controlling a small grain cereals disease according to any one of claims 1 to 3, wherein the treating is performed further in combination with one or two or more selected from a fungicide, an insecticide, a miticide, a nematicide, a herbicide, a plant growth regulator, and a safener.

5. A method for suppressing lodging damage of small grain cereals comprising:
treating seed of small grain cereals with one or two or more selected from a dichloroisothiazole compound or a salt thereof, wherein the small grain cereals is at least one selected from wheat, barley, rye, and oat and wherein the dichloroisothiazole compound or the salt thereof is a 3,4-dichloroisothiazole derivative or a salt thereof and is one or two or more selected from the following compound (1) or salts thereof:

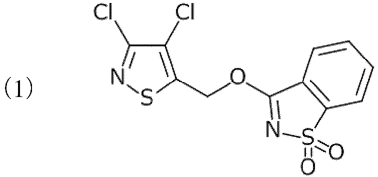

6. Seed of small grain cereals treated with one or two or more selected from a dichloroisothiazole compound or a salt thereof, wherein the small grain cereals is at least one selected from wheat, barley, rye, and oat and wherein the dichloroisothiazole compound or the salt thereof is a 3,4-dichloroisothiazole derivative or a salt thereof and is one or two or more selected from the following compound (1) or salts thereof:
